(19) **Europäisches Patentamt / European Patent Office / Office européen des brevets**

(11) **EP 4 625 916 A1**

(12) **EUROPEAN PATENT APPLICATION**
published in accordance with Art. 153(4) EPC

(43) Date of publication:
**01.10.2025 Bulletin 2025/40**

(21) Application number: **22968277.8**

(22) Date of filing: **16.12.2022**

(51) International Patent Classification (IPC):
*H04L 27/26* (2006.01)

(52) Cooperative Patent Classification (CPC):
**H04L 27/26**

(86) International application number:
**PCT/CN2022/139755**

(87) International publication number:
**WO 2024/124573 (20.06.2024 Gazette 2024/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Huawei Technologies Co., Ltd.**
**Shenzhen, Guangdong 518129 (CN)**

(72) Inventors:
• **ZHANG, Zhang**
  **Shenzhen, Guangdong 518129 (CN)**
• **WANG, Fan**
  **Shenzhen, Guangdong 518129 (CN)**
• **FENG, Qi**
  **Shenzhen, Guangdong 518129 (CN)**

(74) Representative: **Isarpatent**
**Patent- und Rechtsanwälte**
**Barth Hassa Peckmann & Partner mbB**
**Friedrichstraße 31**
**80801 München (DE)**

(54) **SEQUENCE TRANSMISSION METHOD AND APPARATUS**

(57) This application provides a sequence transmission method and apparatus. The method includes: A communication apparatus transmits a signal based on a sequence in a first sequence set. The first sequence set is determined based on a first base sequence set in combination with at least one of a first matrix and a first function. Therefore, communication performance when a signal is transmitted based on a sequence in a base sequence set can be improved by using the first matrix and/or the first function.

S201: A communication apparatus obtains a first sequence set, where the first sequence set is determined based on a first base sequence set and at least one of a first matrix and a first function

S202: The communication apparatus transmits a signal based on a sequence in the first sequence set

FIG. 2

**Description**

TECHNICAL FIELD

This application relates to the field of mobile communication technologies, and in particular, to a sequence transmission method and apparatus.

BACKGROUND

A sequence is an ordered set of numbers or elements. Therefore, a specific sequence may be used to implement a specific function by using a structure and a property of the specific sequence in different scenarios. In technical scenarios such as communication and sensing, the sequence plays a very important role. For example, the sequence may be used to generate a synchronization signal, or may be used as a spreading code in a code division multiple access technology, or may be used to implement sensing based on a Doppler frequency offset of the received sequence, or may be used in a technology such as scrambling, encryption, or precoding codebook generation.

Currently, a sequence commonly used in the communication field is, for example, a ZC (Zadoff-Chu) sequence, an m-sequence, or a Golay (Golay) sequence. Cross-correlation of the ZC sequences is poor, which may affect accuracy of cell identifier detection. Auto-correlation of the m-sequence is poorer than auto-correlation of the ZC sequence. There are a small quantity of Golay sequences, and repetition is likely to occur in use. When these common sequences are used for communication or sensing, a communication performance requirement may not be met, and a new sequence needs to be used to transmit a signal.

SUMMARY

This application provides a sequence transmission method and apparatus, to improve performance of sequence-based communication.

According to a first aspect, a sequence transmission method is provided. The method may be implemented by a communication apparatus, and the communication apparatus may be used as a transmitter or a receiver of a signal. The terminal apparatus may be a terminal device, a network device, a component in the terminal device, or a component in the network device. The component in this application may include, for example, at least one of a chip, a chip system, a processor, a transceiver, a processing unit, or a transceiver unit. For example, an execution body is a terminal apparatus. The method may be implemented by using the following steps: The communication apparatus obtains a first sequence set, where the first sequence set is determined based on a first base sequence set and at least one of a first matrix and a first function; and transmits a signal based on a sequence in the first sequence set.

According to the foregoing method, the communication apparatus may transmit the signal based on the sequence in the first sequence set. The first sequence set is determined based on the first base sequence set in combination with at least one of the first matrix and the first function. Therefore, communication performance when a signal is transmitted based on a sequence in a base sequence set can be improved by using the first matrix and/or the first function.

In a possible implementation, the first matrix and the first function are used to extend a sequence in the first base sequence set.

In this implementation, the first matrix and/or the first function may be used to extend the sequence in the first base sequence set to obtain the first sequence set. A sequence having a specific property, for example, having a good auto-correlation characteristic, may be selected for a base sequence in the base sequence set. By using an extension function and/or an extension matrix, a new good characteristic can be obtained on a basis of retaining an original property, for example, a cross-correlation characteristic that is not originally available is obtained; or a length of a sequence is increased, a capacity of a sequence is expanded, or the like. Therefore, a communication gain brought by newly added performance can be obtained by using mechanical energy of an extended sequence for communication.

In a possible implementation, a length of the sequence in the first sequence set is an integer multiple of a length of the sequence in the first base sequence set, and/or a quantity of sequences in the first sequence set is an integer multiple of a quantity of sequences in the first base sequence set.

In this implementation, the sequence in the first base sequence set may be extended in a sequence length dimension and/or a sequence quantity dimension by using the first matrix and/or the first function, so that a length and/or a quantity of base sequences are/is increased, to improve a communication capacity.

In a possible implementation, any sequence, any sequence multiplied by a constant, or a conjugate sequence of any sequence in the first base sequence set is a subsequence of a sequence in the first sequence set, and the subsequence is obtained in an equally spaced sampling manner.

In this implementation, the sequence, the sequence multiplied by the constant, or the conjugate sequence of the sequence in the first base sequence set may be extended in an equally spaced arrangement manner, to obtain the sequence in the first sequence set. A sequence length obtained in this manner is extended, so that the communication capacity can be increased. In addition, because the extension manner is to extend the base sequence, the base sequence multiplied by the constant, or the conjugate sequence of the base sequence, an extended sequence has good cross-correlation, so that the cross-correlation of the extended sequence can be ensured.

In a possible implementation, the first base sequence set and the first function meet:

the sequence in the first base sequence set is a polyphase sequence whose general term is $e^{-2\pi j\frac{(an^3+bn^2+cn+d)}{N}}$, where e is an Euler constant, n is greater than or equal to 1 and less than or equal to N, *a, b*, c, and d are all constants, $j = \sqrt{-1}$, N is a prime number, and the first function includes performing sequence connection on the sequences in the first base sequence set.

Based on this implementation, a base sequence set including a polyphase sequence that meets the foregoing general term, such as a ZC sequence, may be extended in a connection manner, to improve signal cross-correlation when the ZC sequence is used for transmission.

In a possible implementation, the first matrix and the first function meet:

the first matrix is represented as $\begin{bmatrix} x1 & x2^* \\ -x2 & x1^* \end{bmatrix}$, and the first function is used to respectively replace x1 and x2 in the first matrix with different sequences in the first base sequence set, where x2* represents a conjugate sequence of the sequence x2, x1* represents a conjugate sequence of the sequence x1, and -x2 represents the sequence x2 multiplied by minus 1.

Based on this implementation, the base sequence may be extended in a replacement manner based on the first matrix. For example, a sequence length may be extended when base sequences are a Golay complementary sequence pair or a Golay complementary sequence set.

In a possible implementation, the first base sequence set, the first matrix, and the first function meet:

the sequence in the first base sequence set is a binary sequence, the first matrix is a real orthogonal coding matrix of a 2x2 matrix, a 4x4 matrix, or an 8x8 matrix, and the first function is used to replace at least two elements in the first matrix with sequences in the first base sequence set;

the sequence in the first base sequence set is a polyphase sequence whose general term is $e^{-2\pi j\frac{(an^3+bn^2+cn+d)}{N}}$, where e is an Euler constant, n is greater than or equal to 1 and less than or equal to N, *a, b,* c, and d are all constants, $j = \sqrt{-1}$, N is a prime number, the first matrix is a unitary matrix, and the first function includes performing a Kronecker product on a matrix form of the first base sequence set and the first matrix;

sequences in the first base sequence set form a complementary sequence pair or a complementary sequence set, the first matrix is a unitary matrix, and the first function includes performing a Kronecker product or a Hadamard product on a matrix form of the first base sequence set and the first matrix; or

the sequence in the first base sequence set is a maximum-length sequence, the first matrix is a row unitary matrix or a column unitary matrix, and the first function includes performing a Kronecker product or a Hadamard product on a matrix form of the first base sequence set and the first matrix.

Based on this implementation, the corresponding first base sequence set may be extended based on the first matrix and the first function that are shown in the foregoing items, to improve communication performance of the base sequence set. The maximum-length sequence may be an m-sequence. Therefore, signal auto-correlation when the m-sequence is used for transmission can be improved. In addition, when the base sequences are a set formed by binary sequences, an orthogonal matrix is selected as the first matrix, so that a property of an original base sequence set, for example, an auto-correlation characteristic, can be retained. Moreover, an additional property, for example, a cross-correlation characteristic, may be introduced through replacement. When the base sequence is a polyphase sequence (that is, a quantity of phases of all base sequences is greater than 2), a complex number exists in an element of the base sequence. In this case, a unitary matrix needs to be used to ensure that an original property is retained and a new property is introduced after extension.

In a possible implementation, the first base sequence set, the first matrix, and the first function meet:

the sequence in the first base sequence set is a sequence whose general term is $e^{-2\pi j\frac{f(n)+d}{q}}$, where $f$ (n) is a positive integer whose value belongs to [0, *q* - 1], d is a constant, $j = \sqrt{-1}$, q is a positive integer, the first matrix is a linear matrix on a Galois finite field GF(q), and the first function includes performing matrix multiplication on a matrix form of the first base sequence set and the first matrix.

Based on this implementation, the base sequence set of the sequence whose general term is $e^{-2\pi j\frac{f(n)+d}{q}}$ may be extended based on the first matrix and the first function, so that the base sequence with the general term obtains an extension gain. The base sequence set may include a plurality of sequences. The linear matrix on GF(q) is used as the first matrix, so that an extended sequence in the first sequence set is applicable to phase shift keying modulation.

In a possible implementation, the first base sequence set is determined based on a second base sequence set and at least one of a second function and a second matrix; a sequence in the second base sequence set includes at least one of the following:

a polyphase sequence whose general term is $e^{-2\pi j\frac{(an^3+bn^2+cn+d)}{N}}$, where e is an Euler constant, $1\leq n\leq N$, *a, b, c,* and *d*

are all constants, $j=\sqrt{-1}$, *N* is a prime number, and N is a prime number;
a binary sequence; and

a sequence whose general term is $e^{-2\pi j\frac{f(n)+d}{q}}$, where *f*(n) is a positive integer whose value belongs to *[0, q* - 1], d is a constant, $j=\sqrt{-1}$, and *q* is a positive integer;
the second function includes at least one of the following:

performing sequence connection on sequences in the second base sequence set; replacing at least two elements in the second matrix with different sequences in the base sequence set; and performing a Kronecker product or a Hadamard product on a matrix form of the second base sequence set and the second matrix; and
the second matrix includes at least one of the following:
a real orthogonal coding matrix of a 2x2 matrix, a 4x4 matrix, or an 8x8 matrix; and a unitary matrix.

Based on this implementation, the first base sequence set may be obtained by extending the sequence in the second base sequence set, so that the sequence extension can be further implemented, and communication performance can be improved. For a manner of extending the sequence in the second base sequence set, refer to the descriptions of the manner of extending the sequence in the first base sequence set to obtain the first sequence set.

In a possible implementation, the unitary matrix is a discrete Fourier transform DFT matrix, a cyclic shift orthogonal matrix, or a circulant unitary matrix.

The unitary matrix in this application may include a common unitary matrix such as the DFT matrix, the cyclic shift orthogonal matrix, or the circulant unitary matrix, to facilitate OFDM processing, generation of a cyclic code, or the like.

In a possible implementation, the communication apparatus may obtain a second sequence set, where the second sequence set is a subset of the first sequence set; map the second sequence set to a transmission resource, to obtain a first signal; and send the first signal.

Based on this implementation, the communication apparatus may send the signal based on the subset (that is, the second sequence set) of the first sequence set. Therefore, an appropriate sequence may be selected for sending from the first sequence set based on a requirement, to improve performance.

In a possible implementation, the communication apparatus may map different sequences in the second sequence set to different orthogonal frequency division multiplexing OFDM symbols; or the communication apparatus may map K sequences in the second sequence set to a same OFDM symbol, where K is a positive integer greater than 1 .

Based on this implementation, the communication apparatus may map the sequences in the second sequence set to the same OFDM symbol or the different OFDM symbols, to implement time division or frequency division transmission.

In a possible implementation, the communication apparatus may separately map the K sequences in the second sequence set to N subcarriers that are contiguously distributed; or the communication apparatus may separately map, in an interleaving manner, the K sequences in the second sequence set to K*N subcarriers that are equally spaced, where N is a length of the sequence in the first sequence set and the second sequence set, N is a positive integer, K≤M, and M is a quantity of sequences in the second sequence set.

Based on this implementation, the communication apparatus may map the sequences in the second sequence set by using block-based continuous mapping or comb-like mapping, to implement a more flexible resource mapping manner. Different mapping manners lead to different properties of the sequence. For example, using the block-based continuous mapping facilitates separation and individual processing of signals corresponding to subsequences in the sequence set; and using the comb-like mapping may cause time domain repetition of a signal, so that auto-correlation processing and the like are performed by using a received signal. In addition, an ambiguity function used after comb-like mapping of some sequence sets is optimized, and an ambiguity function used after block-based mapping of some sequence sets achieves a better effect in a specific area.

In a possible implementation, the communication apparatus may receive a first signal, where the first signal is obtained by mapping a second sequence set to a transmission resource, and the second sequence set is a subset of the first sequence set.

Based on this implementation, the communication apparatus may receive the signal based on the subset (that is, the second sequence set) of the first sequence set. When receiving the signal, the communication apparatus may learn of a sequence in the second sequence set. For example, the communication apparatus uses a same rule as the communication apparatus that sends the first signal. The rule is used to select the sequence in the second sequence set from the sequences in the first sequence set. In addition, the communication apparatus may not need to learn of a specific sequence in the second sequence set.

For example, when a sequence is only used for synchronization, when a communication apparatus that receives a signal learns of a specific transmitted signal, the communication apparatus may perform sliding correlation with the received signal by using a clean original signal template (that is, a locally generated signal that is not transmitted), find a correlation peak to determine timing, and implement synchronization based on the timing. Alternatively, the received signal may be used. For example, when a transmitter terminal apparatus sends a same specific sequence twice at a fixed position, a receiver terminal apparatus extracts two actual received signals based on a relationship of the fixed position, calculates correlation between the two actual received signals, finds a correlation peak to determine timing, and implements synchronization based on the timing. In this case, the receiver terminal apparatus may not learn of a specific form of a sending sequence, and only needs to detect a sequence of a system.

In a possible implementation, the sequences in the first base sequence set are a first ZC sequence and a second ZC sequence, the first matrix is $\begin{bmatrix} x & y^* \\ -y & x^* \end{bmatrix}$, the first function is used to respectively replace x and y with the first ZC sequence and the second ZC sequence, y* represents a conjugate sequence of the sequence y, x* represents a conjugate sequence of the sequence x, and -y represents the sequence y multiplied by minus 1.

Based on this implementation, the communication apparatus may extend the first ZC sequence and the second ZC sequence by using the first matrix, to improve signal cross-correlation when the ZC sequence is used for communication.

In a possible implementation, the first ZC sequence is represented as zc1, the second ZC sequence is represented as zc2, and the sequences in the first sequence set include:

[zc1, zc2*1, where zc2* represents a conjugate sequence of zc2; and

[-zc2, zc1* , where -zc2 represents zc2 multiplied by minus 1, and zc1* represents a conjugate sequence of zc1.

Based on this implementation, an element in a coding matrix of an Alamouti code is replaced by using the coding matrix of the Alamouti code, so that an ideal cross-correlation characteristic between two long sequences (that is, [zc1, zc2*] and [-zc2, zc1*]) is implemented, and the base sequences zc1 and zc2 before extension have no ideal cross-correlation characteristic.

In a possible implementation, a first base sequence includes a row of elements in a third matrix, the third matrix is a binary matrix, a 1st row of elements and a 2nd row of elements in the first matrix form Golay complementary sequences, the first matrix is a cyclic shift orthogonal matrix, the first function includes performing a Kronecker product on a matrix form of the first base sequence set and the first matrix, a sequence in the first sequence set is a row of elements in a fourth matrix, and the fourth matrix is a matrix obtained by performing the Kronecker product on the matrix form of the first base sequence set and the first matrix.

Based on this implementation, the communication apparatus may extend a sequence quantity of the Golay complementary sequence by using the cyclic shift orthogonal matrix.

In a possible implementation, the communication apparatus may further receive first signaling, where the first signaling includes at least one piece of the following information: first information, indicating the sequence in the first base sequence set from a candidate set of base sequences; second information, indicating the first matrix from a candidate set of first matrices; and third information, indicating the first function from a candidate set of first functions.

Based on this implementation, the communication apparatus may determine, based on the first signaling, the sequence in the first base sequence set from the candidate set of base sequences, determine the first matrix from the candidate set of first matrices, and/or determine the first function from the candidate set of first functions, to implement flexible setting of the first base sequence set, the first matrix, and the first function.

In a possible implementation, the communication apparatus may further receive second signaling, where the second signaling indicates at least one of the following: the candidate set of base sequences; the candidate set of first matrices; and the candidate set of first functions.

Based on this implementation, the communication apparatus may determine the candidate set of base sequences, the candidate set of first matrices, or the candidate set of first functions based on the second signaling, to implement flexible setting of the candidate set.

In a possible implementation, the communication apparatus may further receive third signaling, where the third signaling indicates a modulation scheme of the sequence from a candidate set of modulation schemes; and/or indicates a coding scheme of the sequence from a candidate set of coding schemes.

Based on this implementation, the communication apparatus may determine the modulation scheme of the sequence from the candidate set of modulation schemes based on the third signaling, to send or receive the first signal based on the modulation scheme; and/or the communication apparatus may determine the coding scheme of the sequence from the candidate set of coding schemes based on the third signaling, to send or receive the first signal based on the coding scheme.

In a possible implementation, the communication apparatus may further receive fourth signaling, where the fourth signaling indicates a candidate set of modulation schemes and/or a candidate set of coding schemes.

Based on this implementation, the communication apparatus may determine the candidate set of modulation schemes and/or the candidate set of coding schemes based on the fourth signaling, to implement flexible setting of the candidate set.

In a possible implementation, the communication apparatus may further determine a modulation scheme of the sequence based on at least one of the first base sequence set, the first matrix, and the first function, where the at least one of the first base sequence set, the first matrix, and the first function corresponds to the modulation scheme of the sequence; and/or determine a coding scheme of the sequence based on at least one of the first base sequence set, the first matrix, and the first function, where the at least one of the first base sequence set, the first matrix, and the first function corresponds to the modulation scheme and the coding scheme of the sequence.

Based on this implementation, the communication apparatus may determine, based on at least one of the first base sequence set, the first matrix, and the first function, the modulation scheme and/or the coding scheme corresponding to the sequence, to send or receive the first signal based on the modulation scheme and/or the coding scheme. In this implementation, the modulation scheme and/or the coding scheme do/does not need to be indicated by using signaling. Therefore, signaling overheads can be reduced.

According to a second aspect, a communication apparatus is provided. The apparatus may implement the method according to any one of the first aspect and the possible designs of the first aspect. The apparatus has a function of the foregoing communication apparatus. The apparatus is, for example, a terminal device, a functional module in the terminal device, a network device, or a functional module in the network device.

In an optional implementation, the apparatus may include modules that are in one-to-one correspondence with the methods/operations/steps/actions described in the first aspect. The modules may be hardware circuits or software, or may be implemented by a combination of the hardware circuits and the software. In an optional implementation, the apparatus includes a processing unit (sometimes also referred to as a processing module) and a processing unit (sometimes also referred to as a communication unit, a transceiver module, a communication module, or the like). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as a transceiver unit, and the functional module can implement the sending function and the receiving function. Alternatively, the sending unit and the receiving unit may be different functional modules, and the transceiver unit is a general term for these functional modules.

When configured to implement the method described in the first aspect, the processing unit may be configured to obtain a first sequence set, where the first sequence set is determined based on a first base sequence set and at least one of a first matrix and a first function. The transceiver unit may be configured to transmit a signal based on a sequence in the first sequence set.

In a possible implementation, the transceiver unit may be specifically configured to obtain a second sequence set, where the second sequence set is a subset of the first sequence set; then map the second sequence set to a transmission resource, to obtain a first signal; and send the first signal.

In a possible implementation, the transceiver unit may specifically map different sequences in the second sequence set to different orthogonal frequency division multiplexing OFDM symbols; or may map K sequences in the second sequence set to a same OFDM symbol, where K is a positive integer greater than 1.

In a possible implementation, the transceiver unit may specifically separately map the K sequences in the second sequence set to N subcarriers that are contiguously distributed; or may separately map, in an interleaving manner, the K sequences in the second sequence set to K*N subcarriers that are equally spaced, where N is a length of the sequence in the first sequence set and the second sequence set, N is a positive integer, $K \leq M$, and M is a quantity of sequences in the second sequence set.

In a possible implementation, the transceiver unit may specifically receive a first signal, where the first signal is obtained by mapping a second sequence set to a transmission resource, and the second sequence set is a subset of the first sequence set.

In a possible implementation, the transceiver unit may further receive first signaling, where the first signaling includes at least one piece of the following information: first information, indicating the sequence in the first base sequence set from a candidate set of base sequences; second information, indicating the first matrix from a candidate set of first matrices; and third information, indicating the first function from a candidate set of first functions.

In a possible implementation, the transceiver unit may further receive second signaling, where the second signaling indicates at least one of the following: the candidate set of base sequences; the candidate set of first matrices; and the candidate set of first functions.

In a possible implementation, the transceiver unit may further receive third signaling, where the third signaling indicates a modulation scheme of the sequence from a candidate set of modulation schemes; and/or indicates a coding scheme of the sequence from a candidate set of coding schemes.

In a possible implementation, the transceiver unit may further receive fourth signaling, where the fourth signaling indicates a candidate set of modulation schemes and/or a candidate set of coding schemes.

In a possible implementation, the processing unit may further determine a modulation scheme of the sequence based on at least one of the first base sequence set, the first matrix, and the first function, where the at least one of the first base sequence set, the first matrix, and the first function corresponds to the modulation scheme of the sequence; and/or determine a coding scheme of the sequence based on at least one of the first base sequence set, the first matrix, and the first function, where the at least one of the first base sequence set, the first matrix, and the first function corresponds to the modulation scheme and the coding scheme of the sequence.

According to a third aspect, an embodiment of this application further provides a communication apparatus, including a processor, configured to execute a computer program (or computer-executable instructions) stored in a memory. When the computer program (or the computer-executable instructions) is executed, the apparatus is enabled to perform the method according to the first aspect and the possible implementations of the first aspect. The communication apparatus may be used as a network apparatus or a terminal apparatus, and the network apparatus is, for example, a network device or a component in the network device.

In a possible implementation, the processor and the memory are integrated together.

In another possible implementation, the memory is located outside the communication apparatus.

The communication apparatus further includes a communication interface. The communication interface is for communication between the communication apparatus and another device, for example, for data and/or signal sending or receiving. For example, the communication interface may be a transceiver, a circuit, a bus, a module, or another type of communication interface.

According to a fourth aspect, an embodiment of this application further provides a terminal apparatus, configured to perform the method according to the first aspect and the possible implementations of the first aspect.

According to a fifth aspect, an embodiment of this application further provides a network apparatus, configured to perform the method according to the first aspect and the possible implementations of the first aspect.

According to a sixth aspect, a computer-readable storage medium is provided. The computer-readable storage medium is configured to store a computer program or instructions, and when the computer program or the instructions are run, the method according to any one of the first aspect and the possible implementations of the first aspect is implemented.

According to a seventh aspect, a computer program product including instructions is provided. When the computer program product runs on a computer, the method according to any one of the first aspect and the possible implementations of the first aspect is implemented.

According to an eighth aspect, a chip system is provided. The chip system includes a logic circuit (which may alternatively be understood as that the chip system includes a processor, and the processor may include a logic circuit, and the like), and may further include an input/output interface. The input/output interface may be configured to input a signal, or may be configured to output a signal. The input/output interface may be a same interface. In other words, a same interface can implement both a sending function and a receiving function. Alternatively, the input/output interface includes an input interface and an output interface. The input interface is configured to implement a receiving function, that is, configured to receive a signal. The output interface is configured to implement a sending function, that is, configured to send a signal. The logic circuit may be configured to perform an operation other than the sending and receiving functions in the method according to any one of the first aspect and the possible implementations of the first aspect. The logic circuit may be further configured to transmit a signal to the input/output interface, or receive, from the input/output interface, a signal from another communication apparatus. The chip system may be configured to implement the method according to any one of the first aspect and the possible implementations of the first aspect. The chip system may include a chip, or may include a chip and another discrete component.

Optionally, the chip system may further include a memory, and the memory may be configured to store instructions. The logic circuit may invoke the instructions stored in the memory to implement a corresponding function.

According to a ninth aspect, a communication system is provided. The communication system may include a terminal apparatus and a network device. The terminal apparatus may be configured to perform the method according to any one of the first aspect and the possible implementations of the first aspect, or the network device may be configured to perform the method according to any one of the first aspect and the possible implementations of the first aspect.

For technical effects brought by the second aspect to the ninth aspect, refer to the descriptions of the first aspect. Details are not described herein again.

BRIEF DESCRIPTION OF DRAWINGS

FIG. 1 is a diagram of an architecture of a wireless communication system according to an embodiment of this application;
FIG. 2 is a schematic flowchart of a sequence transmission method according to an embodiment of this application;
FIG. 3 is a logical diagram of obtaining a first sequence set according to an embodiment of this application;
FIG. 4 is a schematic flowchart of a sequence connection operation according to an embodiment of this application;
FIG. 5 is a diagram of sequence auto-correlation performance comparison according to an embodiment of this application;
FIG. 6 is a diagram of sequence cross-correlation performance comparison according to an embodiment of this application;
FIG. 7 is a diagram of a sequence mapping manner according to an embodiment of this application;
FIG. 8 is a diagram of a structure of a communication apparatus according to an embodiment of this application;
FIG. 9 is a diagram of a structure of another communication apparatus according to an embodiment of this application; and
FIG. 10 is a diagram of a structure of another communication apparatus according to an embodiment of this application.

DESCRIPTION OF EMBODIMENTS

Embodiments of this application provide a sequence transmission method and apparatus. The method and the apparatus are based on a same inventive concept. Because the method and the apparatus have a similar problem-resolving principle, for implementations of the apparatus and the method, refer to each other. No repeated description is provided. In descriptions of embodiments of this application, the term "and/or" describes an association relationship between associated objects and indicates that three relationships may exist. For example, A and/or B may indicate the following three cases: Only A exists, both A and B exist, and only B exists. The character "/" generally indicates an "or" relationship between the associated objects. In this application, "at least one" means one or more, and "a plurality of" means two or more. In addition, it should be understood that in descriptions of this application, terms such as "first" and "second" are merely used for distinguishing and description, but should not be understood as indicating or implying relative importance, or should not be understood as indicating or implying an order.

The sequence transmission method provided in embodiments of this application may be applied to a 4th generation (4th generation, 4G) communication system, for example, a long term evolution (long term evolution, LTE) communication system, or may be applied to a 5th generation (5th generation, 5G) communication system, for example, a 5G new radio (new radio, NR) communication system, or may be applied to various communication systems evolved after 5G, for example, a 6th generation (6th generation, 6G) communication system. The method provided in embodiments of this application may be further applied to a Bluetooth system, a wireless fidelity (wireless fidelity, Wi-Fi) system, a long range radio (long range radio, LORA) system, or an internet of vehicles system. The method provided in embodiments of this application may be further applied to a satellite communication system. The satellite communication system may be integrated with the foregoing communication system.

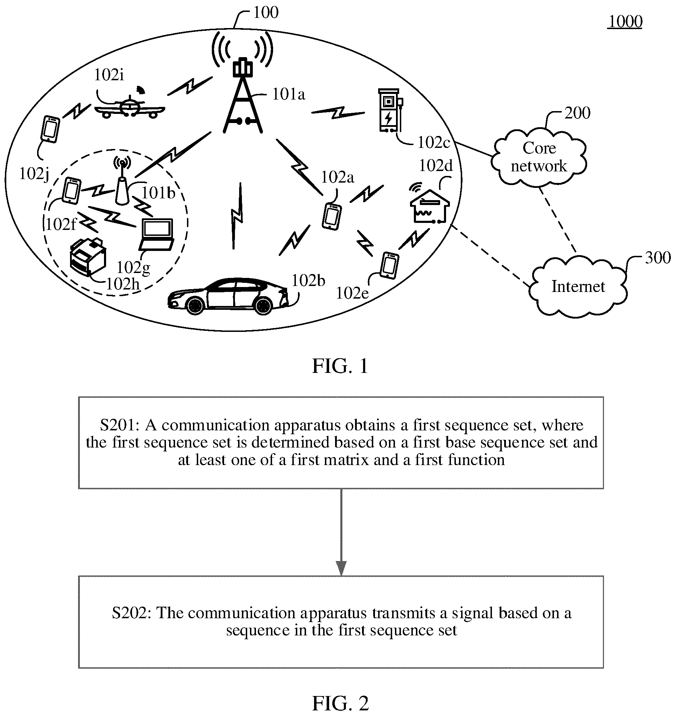

For ease of understanding embodiments of this application, an application scenario used in this application is described by using a communication system architecture shown in FIG. 1 as an example. FIG. 1 is a diagram of a possible and non-limiting system. As shown in FIG. 1, the communication system 1000 includes a radio access network (radio access network, RAN) 100 and a core network (core network, CN) 200. The RAN 100 includes at least one network device (101a and 101b in FIG. 1, collectively referred to as 110) and at least one terminal (102a to 102j in FIG. 1, collectively referred to as a terminal 102). The RAN 100 may further include another RAN node, for example, a wireless relay device and/or a wireless backhaul device (not shown in FIG. 1). The terminal 102 is connected to the network device 101 in a wireless manner. The network device 101 is connected to the core network 200 in a wireless or wired manner. A core network device in the core network 200 and the network device 101 in the RAN 100 may be different physical devices, or may be a same physical device that integrates a logical function of the core network and a logical function of the radio access network.

The RAN 100 may be a cellular system related to the 3rd generation partnership project (3rd generation partnership project, 3GPP), for example, a 4G mobile communication system, a 5G mobile communication system, or a system evolved after 5G (for example, a 6G mobile communication system). The RAN 100 may alternatively be an open access network (open RAN, O-RAN, or ORAN), a cloud radio access network (cloud radio access network, CRAN), or a wireless fidelity (wireless fidelity, Wi-Fi) system. Alternatively, the RAN 100 may be a communication system that integrates the foregoing two or more systems.

The apparatus provided in embodiments of this application may be used in the network device 101 or the terminal 102. It may be understood that FIG. 1 shows only one possible communication system architecture to which embodiments of this application may be applied. In another possible scenario, the communication system architecture may alternatively include another device.

The network device 101 is a node in the RAN, may also be referred to as an access network device, and may further be referred to as a RAN node (or device). The network device 101 is configured to help the terminal implement wireless access. The plurality of network devices 101 in the communication system 1000 may be nodes of a same type, or may be nodes of different types. In some scenarios, roles of the network device 101 and the terminal 102 are relative. For example, the network element 102i in FIG. 1 may be a helicopter or an uncrewed aerial vehicle, and may be configured as a mobile base station. For the terminal 102j that accesses the RAN 100 via the network element 102i, the network element 102i is a base station. However, for the base station 101a, the network element 102i is a terminal. The network device 101 and the terminal 102 are sometimes referred to as communication apparatuses. For example, the network elements 101a and 101b in FIG. 1 may be understood as communication apparatuses having a base station function, and the network elements 102a to 102j may be understood as communication apparatuses having a terminal function.

In a possible scenario, the network device may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6th generation (6th generation, 6G) mobile communication system, a base station in a future mobile communication system, a satellite, an access node in a Wi-Fi system, or the like. The network device may be a macro base station (for example, 110a in FIG. 1), a micro base station or an indoor base station (for example, 110b in FIG. 1), a relay node or a donor node, or a radio controller in a CRAN scenario. Alternatively, the network device may be a device that functions as a base station in device to device (device to device, D2D) communication, internet of vehicles communication, or machine communication. Optionally, the network device may be a server, a wearable device, a vehicle, a vehicle-mounted device, or the like. For example, an access network device in a vehicle to everything (vehicle to everything, V2x) technology may be a road side unit (road side unit, RSU).

In another possible scenario, a plurality of network devices cooperate to assist the terminal in implementing wireless access, and different network devices respectively implement some functions of the base station. For example, the network device may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the network device may be a CU node, a DU node, or a device including a CU node and a DU node. In addition, the CU may be classified as a network device in an access network RAN, or the CU may be classified as a network device in a core network CN. This is not limited herein.

In different systems, the CU (or the CU-CP and the CU-UP), the DU, or the RU may also have different names, but a person skilled in the art may understand meanings of the names. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The terminal device 102 may also be referred to as user equipment (user equipment, UE), a mobile station (mobile station, MS), a mobile terminal (mobile terminal, MT), or the like, and is a device that provides a user with voice or data connectivity, or may be an internet of things device. For example, the terminal device includes a handheld device, a vehicle-mounted device, or the like that has a wireless connection function. Currently, the terminal device may be a mobile phone, a tablet computer, a notebook computer, a palmtop computer, a mobile internet device (mobile internet device, MID), a wearable device (for example, a smartwatch, a smart band, or a pedometer), a vehicle-mounted device (for example, a car, a bicycle, an electric vehicle, an airplane, a ship, a train, or a high-speed rail), a virtual reality (virtual reality, VR) device, an augmented reality (augmented reality, AR) device, a smart point of sale (point of sale, POS) machine, a customer-premises equipment (customer-premises equipment, CPE), a wireless terminal in industrial control, a smart home device (for example, a refrigerator, a television, an air conditioner, or an electric meter), a smart robot, a robot arm, a workshop device, a wireless terminal in self-driving, a wireless terminal in telemedicine, a wireless terminal in a smart grid (smart grid), a wireless terminal in transportation safety, a wireless terminal in a smart city, a wireless terminal in a smart home, a flight device (for example, a smart robot, a hot air balloon, an uncrewed aerial vehicle, or an airplane), or the like. The terminal device may alternatively be another device having a terminal function. For example, the terminal device may alternatively be a device that functions as a terminal in D2D communication. In this application, a terminal device having a wireless transceiver function and a chip that can be disposed in the terminal device are collectively referred to as the terminal device. A device form of the terminal is not limited in embodiments of this application.

With reference to the communication system shown in FIG. 1, the following describes in detail the sequence transmission method provided in embodiments of this application.

To better understand the solutions provided in embodiments of this application, the following first describes some terms, concepts, or procedures in embodiments of this application.

1. Sequence

A sequence is an ordered set of numbers or elements. A specific sequence may be used to implement a specific function by using a structure and a property of the specific sequence in different scenarios. In a technical scenario of communication and sensing, a sequence plays an important role. A specific sequence may be carried in a signal and/or data to implement a corresponding communication and/or sensing function.

For example, in a communication system, after being powered on, a terminal device needs to access a network, but the terminal device does not know prior information of the network, and cannot receive information routinely. Therefore, the terminal device first needs to perform network search to determine a frequency resource, timing information, and the like used by the network. To enable the terminal device to obtain the information, a network device (for example, an access network device) periodically sends a synchronization signal carried on a synchronization channel. The synchronization signal is a signal generated based on one or more predefined sequences. Correspondingly, the terminal device may search for a synchronization signal at a plurality of preset frequencies based on a predefined possible synchronization sequence. When finding a specific synchronization signal, the terminal device considers that a network is found, and may subsequently perform time synchronization and frequency offset estimation and compensation, and continue to attempt to receive a subsequent signal and system broadcast information. It can be learned that the sequence plays an important role in an initial synchronization process. Detection performance, and anti-frequency offset, anti-interference, and anti-noise capabilities of the sequence determine whether the terminal device can successfully access the network, and determine a speed at which the terminal device successfully accesses the network. The detection performance of the sequence may be mainly represented as correlation of the sequence. Correlation includes auto-correlation and cross-correlation.

Auto-correlation reflects a degree to which two same sequences match each other at different relative locations. Cross-correlation reflects a degree to which two different sequences match each other at different relative locations. In the communication system, auto-correlation determines whether a start location of a sequence can be accurately detected, and cross-correlation determines a probability of incorrectly identifying a sequence as another sequence.

After obtaining system information required for access, the terminal device attempts to communicate with the network, notifies the network that the terminal device exists, and cooperates with the network to complete a subsequent access procedure. Therefore, similar to downlink synchronization, the terminal device may send a specific uplink synchronization signal on a random access resource reserved in the network, and the uplink synchronization signal is generated based on an uplink synchronization sequence. The network device detects an uplink synchronization signal on each reserved random access resource, to learn whether a terminal device requests to access the network. In addition, in a synchronization system such as a 4th generation (the 4th generation, 4G) mobile communication technology or a 5th generation (the 5th generation, 5G) mobile communication technology, when detecting an uplink synchronization signal, the terminal device further needs to estimate an uplink timing advance parameter, and subsequently notify the terminal device. The terminal device adjusts uplink sending timing of the terminal device based on the parameter, so that uplink sending of a plurality of terminal devices can be synchronized at a frame level, a subframe level, a slot level, or a symbol level, that is, uplink signals of the plurality of terminal devices simultaneously arrive at the network device within a specific error boundary. It can be learned from this that the uplink synchronization sequence also determines performance of uplink random access request detection and uplink timing synchronization parameter estimation.

In addition to being used in a synchronization scenario, the sequence has many other application scenarios and purposes. For example, in a multiple access system, code division multiple access uses a sequence as a spreading code, and uses orthogonality between spreading codes, and different terminal devices use different spreading codes. During corresponding receiving, information of another terminal device can be eliminated by using a spreading code of a corresponding terminal device, to complete receiving of information of a specific terminal device. Similarly, the sequence may be used as a code division means for reuse of many resources and information transmission, for example, pilot reuse. When the sequence is used for such a purpose, performance is mainly affected by correlation of the sequence.

As orthogonal frequency division multiplexing (orthogonal frequency division multiplexing, OFDM) or similar frequency-domain modulation is used as a waveform in the communication system, a peak to average power ratio (peak to average power ratio, PAPR) of the system is one of important factors that need to be considered in the system. For transmission of some signals, especially transmission of an uplink signal, such as an uplink random access signal or an uplink pilot signal, a PAPR of the signal is very important. Designing a corresponding low-PAPR signal by taking advantage of a characteristic of a specific sequence is one of main methods commonly used in a design of such signals.

In study of sensing and integrated sensing and communication, the sequence also has a key effect on implementation and performance of a sensing function. In a signal transmission process, a radio signal is delayed due to a distance. A frequency offset, that is, a Doppler frequency offset, is generated due to relative movement between a transmitter and a receiver or relative movement of a detected target. A specific sequence is sent, and the specific sequence is detected during receiving, so that a delay and a Doppler frequency offset that correspond to a received specific sequence relative to an original sequence are detected, to obtain distance and speed information of a to-be-detected target through calculation. If better sensing performance needs to be achieved, a correlation value of the specific sequence needs to have a peak value corresponding to a correct delay and a correct Doppler frequency offset, and have a low side lobe corresponding to an incorrect delay and/or an incorrect Doppler frequency offset. That is, the specific sequence needs to have better ambiguity function performance.

In addition to the foregoing purposes, the sequence is further widely used in scenarios such as scrambling, encryption, and precoding codebook generation in the communication system. In conclusion, the sequence in the communication system needs to continue to pursue ultimate performance in resolving a classic problem in one aspect, and also needs to propose a new design and enable a new application scenario in another aspect. In an existing system, there are many and complex sequence definitions, and there is a lack of a systematic method. Therefore, it is urgent to study a systematic method for generating a sequence, in a communication system, that is applicable to a plurality of scenarios and purposes.

2. Synchronization

Synchronization is a process of establishing time synchronization and frequency synchronization between a network device and a terminal device. Specifically, one of the network device and the terminal device sends a specific sequence, and a receiver detects the specific sequence. For a downlink, the network device sends a specific sequence, and the terminal device receives the sequence. For an uplink, the terminal device sends a specific sequence, and the network device receives the sequence. Then, the receiver adjusts timing and a carrier of the receiver based on time and a frequency of the detected specific sequence, or notifies a transmitter to perform adjustment.

3. Channel estimation

A channel estimation process includes: A transmitter sends a specific sequence on a specific time-frequency resource, and a receiver receives the specific sequence on the time-frequency resource, and estimates, based on a received signal, a channel corresponding to the time-frequency resource. The transmitter may be a terminal device or a network device, and the receiver may be a network device or a terminal device.

4. Sensing

A receiver and a transmitter of a sensing signal may be located on a same device entity. For example, a network device sends a sensing sequence, receives a radio signal corresponding to a sensing sequence reflected by a terminal device or another target, and obtains location and speed information of the terminal device or the another to-be-detected target by estimating the received radio signal. Alternatively, the sensing receiver and the sensing transmitter may be located on different entities. For example, a terminal device sends a specific sensing sequence on a predefined resource, and a network device detects the sequence sent by the terminal device, to estimate a speed, a distance, and the like.

Currently, sequences mainly used in the communication field include a ZC sequence, an m-sequence, a Golden sequence, a Golay sequence pair, and the like.

The ZC sequence is a common series of downlink primary synchronization sequences in an LTE technology, and has a perfect auto-correlation characteristic, but has a slightly poor cross-correlation characteristic. Therefore, a periodic cross-correlation value between ZC sequences generated by different roots is approximately a root number of a sequence length, to reduce correctness of detecting a cell identifier (identifier, ID) based on the ZC sequence.

The m-sequence is a common series of downlink primary synchronization sequences in an NR technology. When a synchronization signal is generated, a frequency-domain cyclic shift design is used based on the m-sequence.

Therefore, an auto-correlation characteristic and a cross-correlation characteristic of the m-sequence are not 0. As a result, the auto-correlation characteristic of the m-sequence still needs to be improved compared with the auto-correlation characteristic of the ZC sequence. A Golden sequence is generated by using two m-sequences, is a sequence whose characteristic is relatively close to the m-sequence, and is usually used for scrambling in communication, and the like.

As a binary sequence pair proposed earlier, the Golay sequence pair has a complementary characteristic, that is, the Golay sequence pair has perfect auto-correlation and cross-correlation characteristics, but a quantity of sequences in the Golay sequence pair is small, and sequence repetition is likely to occur. Similarly, a Golay sequence set (including a plurality of Golay sequences) also has a similar problem. In addition, when there is a Doppler frequency offset, the complementary characteristic of the Golay sequence is also damaged.

In conclusion, currently commonly used sequences have respective problems, which may cause deterioration of communication performance.

Embodiments of this application provide a sequence transmission method. A sequence generated based on the method can compensate for a defect of a currently commonly used sequence, to improve communication performance. The method provided in embodiments of this application may be implemented by a communication apparatus. Optionally, the communication apparatus may be a transmitter and/or a receiver of a signal. Specifically, the communication apparatus may correspond to the network device or the terminal device in the communication system shown in FIG. 1. For example, the communication apparatus may be the network device 101 or a component in the network device 101, or may be the terminal device 102 or a component in the terminal device 102. It may be understood that the component in this application may include, for example, at least one of functional modules such as a chip, a chip system, a processor, a transceiver, a processing unit, or a transceiver unit.

The following describes the method provided in embodiments of this application by using an example in which the method is performed by the communication apparatus.

As shown in FIG. 2, the sequence transmission method provided in embodiments of this application may include the following steps.

S201: The communication apparatus obtains a first sequence set.

The first sequence set is determined based on a first base sequence set and at least one of a first matrix and a first function.

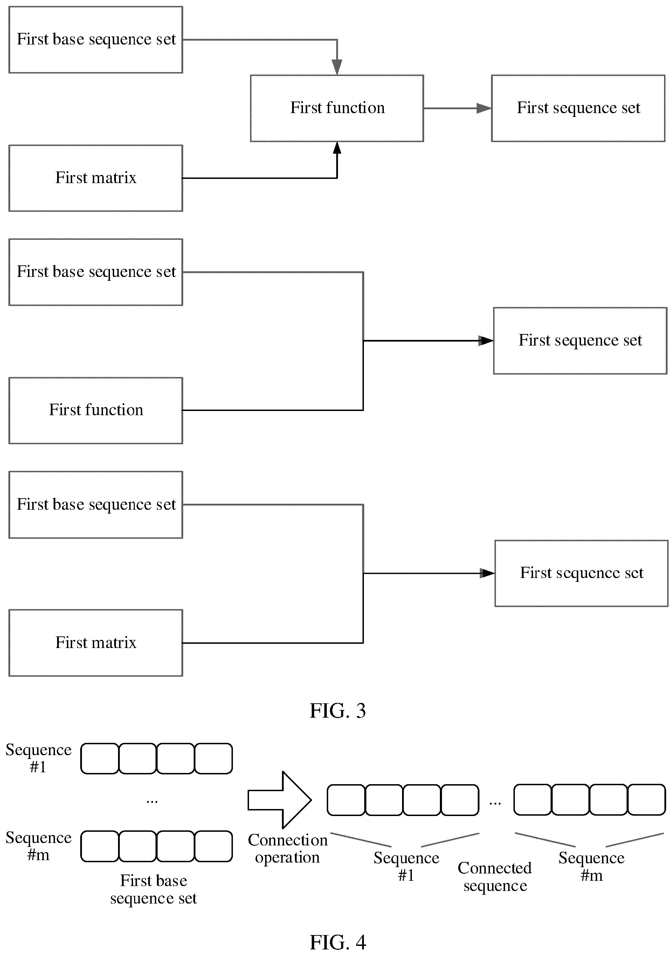

As shown in FIG. 3, the first sequence set may be obtained by performing an operation of the first function on the first base sequence set, or may be obtained by performing a function operation of the first function on the first base sequence set and the first matrix, or may be obtained by using the first base sequence set and the first matrix. In addition, sequence processing such as permutation, interleaving, connection, segmentation, or puncturing may be performed based on the first base sequence set and the first matrix to obtain the first sequence set. In this case, it may be understood that the first function does not need to participate in a process of generating the first sequence set.

The following separately describes the first base sequence set, the first matrix, and the first function.

(1) First base sequence set

In this application, a sequence in the first base sequence set may be referred to as a base sequence. In a possible implementation, the base sequence may include at least one sequence such as a ZC sequence, an m-sequence, a Golay sequence pair, or a Golay sequence set. The first matrix and the first function may be used to extend the sequence in the first base sequence set, where extension may include extension of a sequence length and/or extension of a quantity of sequences. The extension of the sequence length means that a length of a sequence in the first sequence set is greater than a sequence length of the base sequence. The extension of the quantity of sequences means that a quantity of sequences in the first sequence set is greater than a quantity of base sequences in the first base sequence set.

For example, the sequence in the first sequence set may be a polyphase sequence whose general term is $e^{-2\pi j\frac{(an^3+bn^2+cn+d)}{N}}$. $e$ is an Euler constant, $N$ is a length of the sequence, and $n$ represents a location of an element in the sequence, that is, ranking of the element in the sequence. If a sequence location number starts from 1, a value range of n is a positive integer greater than or equal to 1 and less than or equal to $N$. If a sequence location number starts from 0, a value range of n is a positive integer greater than or equal to 0 and less than or equal to $N - 1$, $a$ is a coefficient of a term $n^3$ in the general term, $b$ is a coefficient of a term $n^2$ in the general term, $c$ is a coefficient of a term $n^1$ in the general term, $d$ is a constant, $j = \sqrt{-1}$, and $a$ is greater than or equal to 0. When $a$ is not equal to 0, this type of sequence may be considered as a sequence similar to an Alltop (Alltop) sequence. In this case, when $N$ is selected as a prime number, an ambiguity function property of the sequence is good, and an ambiguity function is relatively close to an ideal "thumbtack" shape. The first function includes: performing sequence connection on sequences in the base sequence set. When a condition that $a$ is equal to 0 and $b$ is not equal to 0 is met, the general term is a sequence that is widely used, and the sequence includes a ZC sequence, a Frank sequence, a P1 sequence, a P2 sequence, a P3 sequence, a P4 sequence, or the like.

In addition, the sequence in the first sequence set may be a sequence whose general term is $e^{-2\pi j\frac{f(n)+d}{q}}$, where e is an Euler constant, $f(n)$ is a positive integer whose value belongs to [0, $q$ - 1], n=1, 2, ..., N, N is a length of the sequence, $q$ is a positive integer, $d$ is a constant, and $j = \sqrt{-1}$.

Moreover, the sequence in the first sequence set may alternatively be a binary sequence or a real sequence. The binary sequence may be, for example, a Golay sequence pair.

Therefore, it may be considered that the sequences in the first sequence set are a set of sequences obtained after length extension and/or sequence quantity extension are/is performed on the sequences in the first base sequence set. Optionally, the length of the sequence in the first sequence set is an integer multiple of the length of the sequence in the first base sequence set, and/or the quantity of sequences in the first sequence set is an integer multiple of the quantity of sequences in the first base sequence set.

(2) First matrix

The first matrix may be used to extend the first base sequence set, and therefore may also be referred to as an extension matrix. For example, the first matrix may be an orthogonal matrix or a unitary matrix. When the base sequence set is a binary sequence, or phases of elements in the base sequence set include only two phases whose phase difference is $\pi$, the orthogonal matrix may be selected, a property between original sequence sets, such as an auto-correlation characteristic, may be retained, and an additional property, such as a cross-correlation characteristic, is introduced. When the base sequence is a polyphase sequence (that is, a quantity of phases of all base sequences is greater than 2), elements in the base sequence have a complex number. In this case, the unitary matrix needs to be used to ensure that the original property is retained and the new property is introduced after extension. In other words, in this case, the unitary matrix may be selected as the first matrix.

Optionally, commonly used orthogonal matrices and unitary matrices include, for example, a Hadamard (Hadamard) matrix, a discrete Fourier transform (discrete Fourier transform, DFT) matrix, and an orthogonal/circulant unitary matrix. In this application, the unitary matrix may include a DFT matrix, a cyclic shift orthogonal matrix, or a circulant unitary matrix. In addition, a linear matrix on a Galois finite field GF(q), or the like may alternatively be selected as the extension matrix.

The linear matrix on GF(q) is, for example, a Reed-Muller (Reed-Muller, RM) code coding matrix, or a Bose-Chaudhuri-Hocquenghem (Bose-Chaudhuri-Hocquenghem, BCH) code coding matrix. The linear matrix on GF(q) is used as the first matrix, so that an extended sequence in the first sequence set is applicable to phase-shift keying (phase-shift keying, PSK) modulation.

Optionally, the first matrix may be specifically an Alamouti (Alamouti) coding matrix.

For example, the Alamouti coding matrix A is represented as:

$$A = \begin{bmatrix} x_1 & x_2^* \\ -x_2 & x_1^* \end{bmatrix}.$$

$x_i^*$ represents a conjugate of a sequence $x_i$, and $-x_i$ represents the sequence $x_i$ multiplied by minus 1.

In addition, optionally, the first matrix may be a real orthogonal matrix such as a 2x2 matrix $\begin{bmatrix} x_1 & -x_2 \\ x_2 & x_1 \end{bmatrix}$, a 4x4 matrix $\begin{bmatrix} x_1 & -x_2 & -x_3 & -x_4 \\ x_2 & x_1 & x_4 & -x_3 \\ x_3 & -x_4 & x_1 & x_2 \\ x_4 & x_3 & -x_2 & x_1 \end{bmatrix}$, or an 8x8 matrix $\begin{bmatrix} x_1 & -x_2 & -x_3 & -x_4 & -x_5 & -x_6 & -x_7 & -x_8 \\ x_2 & x_1 & -x_4 & x_3 & -x_6 & x_5 & x_8 & -x_7 \\ x_3 & x_4 & x_1 & -x_2 & -x_7 & -x_8 & x_5 & x_6 \\ x_4 & -x_3 & x_2 & x_1 & -x_8 & x_7 & -x_6 & x_5 \\ x_5 & x_6 & x_7 & x_8 & x_1 & -x_2 & -x_3 & -x_4 \\ x_6 & -x_5 & x_8 & -x_7 & x_2 & x_1 & x_4 & -x_3 \\ x_7 & -x_8 & -x_5 & x_6 & x_3 & -x_4 & x_1 & x_2 \\ x_8 & x_7 & -x_6 & -x_5 & x_4 & x_3 & -x_2 & x_1 \end{bmatrix}.$

Alternatively, the first matrix may be a cyclic shift orthogonal matrix. For example, a 3x3 cyclic shift orthogonal matrix may be selected as the extension matrix. For example, the cyclic shift orthogonal matrix $B$ satisfies:

$$B = \begin{bmatrix} 1 & e^{j\frac{2\pi}{3}} & 1 \\ 1 & 1 & e^{j\frac{2\pi}{3}} \\ e^{j\frac{2\pi}{3}} & 1 & 1 \end{bmatrix},$$

where

$$j = \sqrt{-1}.$$

Optionally, a matrix dimension of the first matrix may be determined based on a length and a quantity of extended sequences in the first sequence set.

It may be understood that, when the orthogonal matrix or the unitary matrix such as the Alamouti matrix, the real orthogonal matrix, or the cyclic shift orthogonal matrix is used as the first matrix, a difference (also referred to as a distance) between generated sequences can be better ensured, so that the sequences in the first sequence set have a good recognizable property. In addition, a codeword of a special coding matrix enables the sequence to have a good PAPR property.

(3) First function

In this application, the first function may also be referred to as an extension function, and a corresponding function calculation or operation may be referred to as an extension operation, or may be used to perform a function calculation (or a function operation) on the first base sequence set and the first matrix, to obtain the first sequence set. The first function may be used to perform a function calculation (or a function operation) on the sequence in the first base sequence set. Optionally, the first function may include a Kronecker product, a Hadamard product, replacement, permutation, interleaving, connection, segmentation, puncturing, or the like.

The Kronecker product may be an operation between two matrices, and the Kronecker product may also be referred to as a matrix outer product. In this application, the Kronecker product may be an operation between a matrix form (also referred to as a matrix in a base sequence set) of the base sequence set (for example, the first base sequence set or a second base sequence set in this application) and an extension matrix (for example, the first matrix or a second matrix in this application). In this application, the Kronecker product may be represented as $C = $ kron(B, A). A and B are respectively the matrix form of the base sequence set and the extension matrix, and $C$ represents a matrix obtained by performing a Kronecker product operation. In this application, each sequence in the sequence set may be used as one row of elements in the matrix, and all row elements are in one-to-one correspondence with matrices of all sequences in the sequence set, that is, the matrix form of the sequence set. In addition, each row of elements in the matrix obtained through the operation may alternatively be used as a sequence in a new sequence set.

The Hadamard product of the two matrices may also be referred to as a basic product. For example, if a matrix A= $(a_{ij})$, where $i$ and $j$ respectively represent an $i^{th}$ row and a $j^{th}$ column in the matrix, and $a_{ij}$ and a matrix B=$(b_{ij})$ are two matrices of a same order. If $c_{ij}=a_{ij} \times b_{ij}$, a matrix C=$(c_{ij})$ is referred to as a Hadamard product of A and B. In this application, A and B are respectively the matrix form of the base sequence set and the extension matrix, and C represents a matrix obtained through a Hadamard product operation.

Replacement means that an element in the extension matrix is replaced with one or more base sequences in the base sequence set.

Permutation means that locations of elements in the matrix form of the base sequence set or locations of elements in a control matrix are exchanged with each other. For example, a sequence $[x_1, ... , x_j, ... , x_k, ... x_N]$ in the base sequence set may be changed to $[x_1, ..., x_k, ... , x_j, ... x_N]$ after being permuted.

Interleaving means that sequences in the base sequence set are permuted in a form. For example, assuming that N is an even number, a sequence $[x_1, x_2, x_3, x_4, ... , x_{N-1} x_N]$ in the base sequence set may be changed to $[x_1, x_3, ... , x_{N-1}, ... , x_2, x_4, ... , x_N]$ after being permuted.

Connection means that 1st bits of a plurality of sequences in the base sequence set are connected to obtain a new sequence, or may mean at least one sequence in the base sequence set is connected to at least one element in the extension matrix to obtain a new sequence.

Segmentation means that more sequences are obtained by segmenting at least one sequence in the base sequence set.

Puncturing means that elements at some locations in a sequence are deleted, or elements at some locations in the sequence are set to zero. For example, a sequence $[x_1, ... , x_{i-1}, x_i, x_{i+1}, ... x_N]$ may be changed to $[x_1, ... , x_{i-1}, x_{i+1}, ... x_N]$ after puncturing.

It may be understood that the foregoing descriptions of the first base sequence set, the first matrix, and the first function are examples for description, and various possible examples shown in the foregoing examples should not be understood as a limitation on the foregoing concepts. Based on an actual communication requirement, the first base sequence set and at least one of the first matrix and the first function in the foregoing examples may be implemented in a manner of permutation and combination, or another base sequence, extension matrix, or extension function may be extended based on the foregoing example scope to extend the base sequence in this application.

In addition, the first sequence set in this application may alternatively be determined based on the second base sequence set and at least one of a second function and the second matrix. When the second base sequence set is extended, the second base sequence set may include a polyphase sequence whose general term is $e^{-2\pi j \frac{(an^3+bn^2+cn+d)}{N}}$, a binary sequence, or a sequence whose general term is $e^{-2\pi j \frac{f(n)+d}{q}}$; the second matrix may include at least one of a real orthogonal coding matrix of a 2x2 matrix, a 4x4 matrix, or an 8x8 matrix, or a unitary matrix; and the second function may include at least one of a Kronecker product, a Hadamard product, replacement, permutation, interleaving, connection, segmentation, puncturing, or the like. In other words, the first sequence set is a set of sequences obtained by extending sequences in the second base sequence set in a sequence length dimension and/or a sequence quantity dimension. It may be understood that, for a manner of extending the second base sequence set, refer to the manner of extending the first base sequence set. Details are not described again. In addition, in this application, the second base sequence set may alternatively be a set of sequences obtained through extension in a similar manner based on another base sequence set or sequence set. For an extension manner, refer to the descriptions in this application.

Optionally, a time sequence of performing S201 in this application is not strictly limited provided that S201 is performed before S202. For example, the first sequence set may be obtained before the communication apparatus determines to transmit a signal. For example, the communication apparatus may obtain a sequence in the first sequence set according to the method in this application and locally store the sequence. When the communication apparatus determines to transmit the signal, the communication apparatus may determine a sequence from the stored first sequence set, obtain a signal based on the sequence, and transmit the signal. Alternatively, when determining to transmit the signal, the communication apparatus may transmit the sequence in the first sequence set based on the extension matrix and/or the extension function and the base sequence, and transmit the signal based on the generated sequence. For example, determining to transmit the signal includes: An upper-layer protocol layer of the communication apparatus triggers sending of an uplink signal, or the communication apparatus determines that a signal sent by using a sequence needs to be monitored.

It may be understood that at least one of the first base sequence set, the first matrix, and the first function in this application may be determined by using one or a combination of the following methods.

Optionally, in a first possible implementation, the base sequence (for example, a length, a type, and a specific parameter are defined) in the first base sequence set, the first matrix, and/or the first function are/is defined in a protocol. For example, for a signal transmission scenario of a synchronization signal, at least one of the first base sequence set, the first matrix, and the first function may be determined in a protocol definition manner. In this implementation, a sequence extension manner does not need to be configured by using signaling, so that signaling overheads can be reduced.

Optionally, in a second possible implementation, a candidate set of at least one of the base sequence in the first base sequence set, the first matrix, and the first function is defined in a protocol. In addition, the candidate set of the at least one of the base sequence, the first matrix, and the first function may alternatively be indicated or configured by a network device by using signaling. In addition, the network device sends indication information to a transmitter and/or a receiver, where the indication information may indicate the base sequence from the candidate set of base sequences, indicate the first matrix from the candidate set of first matrices, and/or indicate the first function from the candidate set of first functions. The indication information may be carried in signaling such as radio resource control (radio resource control, RRC) signaling, a medium access control control element (medium access control control element, MAC CE), or downlink control information (downlink control information, DCI). Optionally, the indication information may include at least one of information indicating the base sequence from the candidate set of base sequences, information indicating the first matrix from the candidate set of first matrices, or information indicating the first function from the candidate set of first functions. This implementation is applicable to a pilot signal transmission scenario. For example, the indication information and indication information of a pilot signal may be carried on a same channel resource.

Optionally, in a third possible implementation, a candidate set of at least one of the base sequence, the first matrix, and/or the first function is defined in a protocol; and a specifically used base sequence, first matrix, and/or first function are/is determined by the transmitter, and is not notified to the receiver, and the receiver performs blind detection. This implementation is applicable to a signal transmission scenario of a synchronization signal, and a transmission scenario of a random access signal or a sensing signal, so that signaling overheads can be reduced.

Optionally, in a fourth possible implementation, a candidate set of at least one of the base sequence, the first matrix, and/or the first function is defined in a protocol; and a specifically used base sequence, first matrix, and/or first function are/is determined by the transmitter, and the used base sequence, first matrix, and/or first function are/is indicated to the receiver, where information may be transmitted between the transmitter and the receiver through a private channel, and the private channel may be a sensing channel, a radar, or the like, to save an air interface channel.

The second, third, and fourth possible implementations are applicable to the transmission scenario of the synchronization, random access, or sensing signal that covers a plurality of scenarios. For example, when initial synchronization or random access needs to resist a large frequency offset, synchronization performance can be improved by using a sequence that can resist a large frequency offset range in the second, third, or fourth possible implementation. When initial synchronization or random access does not need to resist a large frequency offset, a synchronization capacity can be improved by using a sequence that can resist a small frequency offset range in the second, third, or fourth possible implementation. For another example, when sensing is mainly used for ranging, a sequence with good ranging performance may be used in the second, third, or fourth possible implementation; and when sensing is mainly used for speed measurement, a sequence with good speed measurement performance may be used in the second, third, or fourth possible implementation.

Optionally, in embodiments of this application, when a sequence is transmitted, a first signal may be sent or received by using different modulation schemes and/or coding schemes based on a purpose of the sequence. For example, time domain mapping modulation (single carrier) or frequency domain mapping modulation (OFDM) is used. It may be understood that for a specific modulation scheme and/or coding scheme used for the sequence, a candidate set of modulation schemes and/or a candidate set of coding schemes may be defined in the protocol, or the candidate set of modulation schemes and/or the candidate set of coding schemes may be indicated by the network device by using signaling. During transmission, the network device sends indication information to the transmitter and/or the receiver. The indication information may include information indicating a modulation scheme of a sequence from the candidate set of modulation schemes, and/or information indicating a coding scheme of the sequence from the candidate set of coding schemes. The indication information may be carried by using RRC signaling, a MAC CE, or DCI. Alternatively, the transmitter may determine the modulation scheme and/or the coding scheme. Alternatively, the modulation scheme and/or the coding scheme may be determined based on the specifically used base sequence, first matrix, and/or first function. For example, a correspondence between the base sequence, the first matrix, and/or the first function and the modulation scheme and/or the coding scheme is set according to the protocol or by using signaling of the network device. After the base sequence, the first matrix, and/or the first function are/is determined, the corresponding modulation scheme and/or coding scheme are/is used based on the correspondence.

In a possible implementation, the communication apparatus may further receive first signaling, where the first signaling includes at least one piece of the following information: first information, indicating the sequence in the first base sequence set from a candidate set of base sequences; second information, indicating the first matrix from a candidate set of first matrices; and third information, indicating the first function from a candidate set of first functions.

Based on this implementation, the communication apparatus may determine, based on the first signaling, the sequence in the first base sequence set from the candidate set of base sequences, determine the first matrix from the candidate set of first matrices, and/or determine the first function from the candidate set of first functions, to implement flexible setting of the first base sequence set, the first matrix, and the first function.

In a possible implementation, the communication apparatus may further receive second signaling, where the second signaling indicates at least one of the following: the candidate set of base sequences; the candidate set of first matrices; and the candidate set of first functions.

Based on this implementation, the communication apparatus may determine the candidate set of base sequences, the candidate set of first matrices, or the candidate set of first functions based on the second signaling, to implement flexible setting of the candidate set.

In a possible implementation, the communication apparatus may further receive third signaling, where the third signaling indicates a modulation scheme of the sequence from a candidate set of modulation schemes; and/or indicates a coding scheme of the sequence from a candidate set of coding schemes.

Based on this implementation, the communication apparatus may determine the modulation scheme of the sequence from the candidate set of modulation schemes based on the third signaling, to send or receive the first signal based on the modulation scheme; and/or the communication apparatus may determine the coding scheme of the sequence from the candidate set of coding schemes based on the third signaling, to send or receive the first signal based on the coding scheme.

In a possible implementation, the communication apparatus may further receive fourth signaling, where the fourth signaling indicates a candidate set of modulation schemes and/or a candidate set of coding schemes.

Based on this implementation, the communication apparatus may determine the candidate set of modulation schemes and/or the candidate set of coding schemes based on the fourth signaling, to implement flexible setting of the candidate set.

In a possible implementation, the communication apparatus may further determine a modulation scheme of the sequence based on at least one of the first base sequence set, the first matrix, and the first function, where the at least one of the first base sequence set, the first matrix, and the first function corresponds to the modulation scheme of the sequence;

and/or determine a coding scheme of the sequence based on at least one of the first base sequence set, the first matrix, and the first function, where the at least one of the first base sequence set, the first matrix, and the first function corresponds to the modulation scheme and the coding scheme of the sequence.

Based on this implementation, the communication apparatus may determine, based on at least one of the first base sequence set, the first matrix, and the first function, the modulation scheme and/or the coding scheme corresponding to the sequence, to send or receive the first signal based on the modulation scheme and/or the coding scheme. In this implementation, the modulation scheme and/or the coding scheme do/does not need to be indicated by using signaling. Therefore, signaling overheads can be reduced.

The following describes, by using examples of Manner 1 to Manner 5, possible implementations of S201 when different first base sequence sets are extended. For example, when the first base sequence set is defined according to the protocol or indicated by the network device, the transmitter and/or the receiver may determine, based on Manner 1 to Manner 5, an extension manner applicable to the first base sequence set, or the transmitter may select an extension manner based on Manner 1 to Manner 5, to obtain a sequence used to blindly detect a received signal.

Manner 1: If the sequence in the first base sequence set is a polyphase sequence whose general term is $e^{-2\pi j \frac{(an^3 + bn^2 + cn + d)}{N}}$, the first function may include a connection function. For a meaning of a symbol in the general term formula, refer to the descriptions of the general term formula in the foregoing content. The connection function may be used to connect the sequences in the first base sequence set. For example, the communication apparatus may connect sequences in the first base sequence set end-to-end in pairs based on the first function and the first base sequence set, to obtain a sequence in the first base sequence set.

Optionally, in Manner 1, a value of at least one of parameters *a, b, c, d,* and N may be defined according to the protocol or may be indicated by the network device. For example, a specific value of a parameter may be given in the protocol in a predefinition manner; or an optional value range of a parameter may be given, and the network device or the terminal determines a value of the parameter based on an attribute of the network device or the terminal during use. For example, a reference factor for determining the value of the parameter may include an identifier of the network device (for example, a cell ID) or an identifier of the terminal device (for example, an international mobile subscriber identity (international mobile subscriber identity, IMSI) of the terminal apparatus), or may be randomly selected. Alternatively, the network device may determine the value of the parameter based on an optional value range indication of the given parameter.

As shown in FIG. 4, a plurality of base sequences (represented as a sequence #1 to a sequence #m) in the first base sequence set are subsequences of sequences obtained after a connection operation, and the sequences obtained after the connection operation are sequences in the first base sequence set.

Optionally, in this implementation, one or more sequences may be obtained by connecting a plurality of base sequences. In FIG. 4, an example in which one sequence is obtained after connection is used only for description. In actual application, this is not limited thereto. For example, the first base sequence set includes four sequences whose lengths are 10, denoted as x1, x2, x3, and x4. In this case, all the four sequences may be connected to obtain a sequence whose length is 40 bits; or x1 and x2 may be connected to obtain a sequence whose length is 20, and x3 and x4 are connected to obtain a sequence whose length is 20.

In Manner 1, at least one long sequence whose length is greater than that of the base sequence is obtained by connecting all the four base sequences, and the long sequence may have better performance in terms of indicators such as correlation and ambiguity. In addition, if a manner of connecting base sequences in pairs is used, the base sequences for connection may be flexibly selected, so that more connected sequences are obtained through a selection degree of freedom. Therefore, a communication capacity can be improved.

Manner 2: If training in the first base sequence set includes a ZC sequence, the first matrix is represented as $\begin{bmatrix} x_1 & x_2^* \\ -x_2 & x_1^* \end{bmatrix}$, and the first function is used to replace $x_1$ and $x_2$ in the first matrix with different sequences in the first base sequence set, that is, the first function is a replacement function. $x_i^*$ represents a conjugate sequence of the sequence $x_i$, and $-x_i$ represents the sequence $x_i$ multiplied by minus 1. In this manner, the sequence in the first base sequence set is not limited.

In a possible example, the sequence in the first base sequence set may include the ZC sequence. For example, the first base sequence set is a complementary sequence pair including a first ZC sequence and a second ZC sequence, the first ZC sequence may be represented as zc1, and the second ZC sequence may be represented as *zc2.*

A replaced matrix is represented as:

$$A' = \begin{bmatrix} zc1 & zc2^* \\ -zc2 & zc1^* \end{bmatrix}.$$

Each row of elements in the matrix A' may be used as a sequence in the first base sequence set. In other words, a sequence s1 = *[zc1, zc2*]* and a sequence s2 = [-*zc2, zc1*]* may be used as sequences in the first base sequence set.

In this implementation, x1 in the first matrix may be replaced with *zc*1, and x2 in the first matrix may be replaced with *zc*2. A specific replacement manner is not described again.

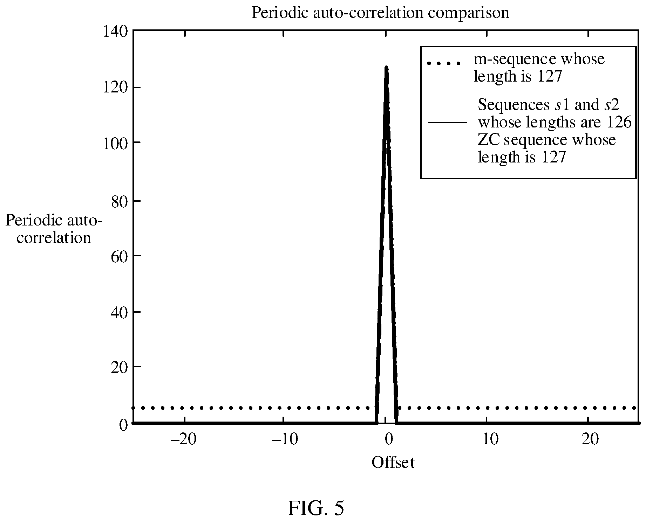

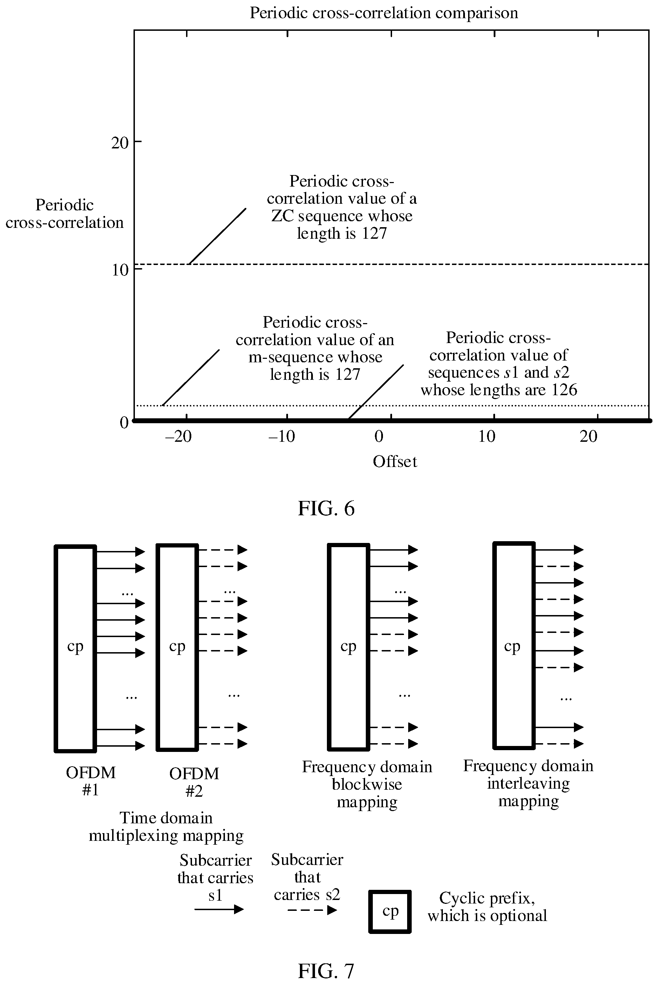

As shown in FIG. 5 and FIG. 6, respective auto-correlation of the sequence s1 and the sequence s2 the sequence, and cross-correlation between the sequence s1 and the sequence s2 have ideal characteristics. Therefore, the foregoing method can be used to improve cross-correlation when a signal is sent based on the ZC sequence. As shown in FIG. 5, side lobe auto-correlation of an m-sequence whose length is 127 is slightly higher than side lobe auto-correlation of a ZC sequence whose length is 127, and side lobe auto-correlation of the sequence s1 and the sequence s2 whose lengths are 126, and the ZC sequence and the sequence s1 have same auto-correlation performance. In addition, as shown in FIG. 6, cross-correlation between the sequence s1 and the sequence s2 is better than that of the m-sequence whose length is 127, and is better than that of the ZC sequence whose length is 127.

Optionally, in Manner 2, another sequence may alternatively be selected as the base sequence. For example, a Golay complementary sequence pair may be selected as the base sequence. In Manner 2, during a replacement operation, some elements in the first matrix may be replaced with forward order arrangement of a sequence in the base sequence or a cyclic shift form of forward order arrangement of the sequence, or some elements in the first matrix may be replaced with reverse order arrangement of a sequence in the base sequence or a cyclic shift form of reverse order arrangement of the sequence.

Optionally, in Manner 2, a specific sequence parameter used for the base sequence may be defined according to the protocol or indicated by the network device. When the base sequence is a ZC sequence, the sequence parameter may include at least one of a length, a root, a cyclic shift, and a specific mapping manner of the ZC sequence, or a value of a parameter or an optional value set of a parameter may be given in the protocol in a predefinition manner. If the optional value set is configured, the network device or the terminal determines a value of the parameter based on an attribute of the network device or the terminal during use. For example, a reference factor for determining the value of the parameter may include an identifier of the network device (for example, a cell ID) or an identifier of the terminal device (for example, an IMSI of the terminal apparatus), or may be randomly selected. Alternatively, the network device may determine the value of the parameter based on an optional value range indication of the given parameter.

Manner 3: If the sequence in the first base sequence set is a binary sequence, the first matrix is a real orthogonal coding matrix of a 2x2 matrix, a 4x4 matrix, or an 8x8 matrix, and the first function is used to replace at least two elements in the first matrix with sequences in the first base sequence set.

In Manner 3, when the base sequence is a binary set, an orthogonal matrix may be selected as the first matrix, to retain a property of the original base sequence, for example, an auto-correlation characteristic, and introduce an additional property, for example, a cross-correlation characteristic, through element replacement.

The binary sequence is, for example, a Golay sequence pair.

Refer to the implementation (2), the first function in the implementation (3) may be used to replace an element in the first matrix or a symbol in an element with a sequence in the binary sequence.

During a replacement operation, some elements in the first matrix may be replaced with forward order arrangement of a sequence in the base sequence or a cyclic shift form of forward order arrangement of the sequence, or some elements in the first matrix may be replaced with reverse order arrangement of a sequence in the base sequence or a cyclic shift form of reverse order arrangement of the sequence.

Optionally, in Manner 3, a specific binary sequence parameter used for the base sequence may be defined according to the protocol or indicated by the network device. For example, the sequence parameter may include at least one of a length of the binary sequence, or a specifically sent actual binary sequence and a cyclic shift. Alternatively, a value of a parameter or an optional value set of a parameter may be given in the protocol in a predefinition manner. If the optional value set is configured, the network device or the terminal determines a value of the parameter based on an attribute of the network device or the terminal during use. For example, a reference factor for determining the value of the parameter may include an identifier of the network device (for example, a cell ID) or an identifier of the terminal device (for example, an IMSI of the terminal apparatus), or may be randomly selected. Alternatively, the network device may determine the value of the parameter based on an optional value range indication of the given parameter.

Manner 4: If the sequence in the first base sequence set is a polyphase sequence whose general term is $e^{-2\pi j \frac{(an^3 + bn^2 + cn + d)}{N}}$, or the sequences in the first base sequence set are a complementary sequence pair or a complementary sequence set, or the sequence in the first base sequence set is a maximum-length sequence, or the first matrix is a unitary matrix, and the first function is a Kronecker product or a Hadamard product.

The unitary matrix may include a commonly used matrix such as a DFT matrix or a circulant unitary matrix, to facilitate OFDM processing, generation of a cyclic code, or the like.

Manner 4 may include several sub-manners, such as sub-manner 4-1, sub-manner 4-2, and sub-manner 4-3, and first base sequence sets in these sub-manners are different. Each sub-manner is described separately herein.

Manner 4-1: The sequence in the first base sequence set is a polyphase sequence whose general term is $e^{-2\pi j\frac{(an^3+bn^2+cn+d)}{N}}$. For a symbol in the general term, refer to the foregoing descriptions. Details are not described herein again. In Manner 4-1, the first function is a Kronecker product.

For example, all sequences in the first base sequence set are ZC sequences. In this manner, a new matrix may be obtained by performing a Kronecker product on a unitary matrix and a matrix including the ZC sequences, and each row of elements in the new matrix is used as a sequence in the first base sequence set. This manner can improve cross-correlation when the signal is sent based on the ZC sequence.

Manner 4-2: The sequences in the first base sequence set are a complementary sequence pair or a complementary sequence set. For example, the first base sequence set includes two Golay sequences, that is, the first base sequence set includes a complementary sequence pair formed by the Golay sequences, or includes more than two Golay sequences, that is, the first base sequence set includes a complementary sequence set formed by the Golay sequences.

According to this solution, a quantity of Golay sequence pairs or Golay sequence sets may be extended, to support communication based on more sequences having a Golay sequence characteristic, to improve communication performance.

For example, the Golay sequence pair forms a matrix $A$, and the matrix A satisfies:

$$A = \begin{bmatrix} A_1 \\ A_2 \end{bmatrix}$$

$A_1$ and $A_2$ are respectively two Golay sequences whose length is 40. For example, $A_1$ and $A_2$ satisfy:

$$A_1 = [1001010001100000011010010100101111111001],$$

and

$$A_2 = [1001010001100000011001101011010000000110],$$

where in $A_1$ and $A_2$, 1 and 0 are mapped to different waveforms or different phases of a same waveform.

In addition, the first matrix in this example may be generated based on a ZC sequence whose length (L) is 3. For example, any k sequences with different cs in three sequences with b=c=1 and a cyclic shift value cs=0, 1, and 2 and three sequences with b=c=2 and a cyclic shift value cs=0, 1, and 2 may be selected as elements in the first matrix.

For example, the first matrix is a cyclic shift orthogonal matrix B, and the cyclic shift orthogonal matrix B satisfies:

$$B = \begin{bmatrix} 1 & e^{j\frac{2\pi}{3}} & 1 \\ 1 & 1 & e^{j\frac{2\pi}{3}} \\ e^{j\frac{2\pi}{3}} & 1 & 1 \end{bmatrix}.$$

In an example in which the first function is a Kronecker product, the matrix form of the first base sequence set is represented as a matrix $A$, and a matrix obtained after a Kronecker product operation is performed on the matrix A and a DFT matrix $B$ is represented as a matrix $C$.

In this application, the matrix $C$ may satisfy $C = kron(B,A)$.

The matrix $C$ is a matrix corresponding to the first sequence set. Therefore, each row of elements in the matrix $C$ may be used as a sequence in the first sequence set.

Manner 4-3: The sequence in the first base sequence set is a maximum-length sequence, for example, an m-sequence.

When the sequence in the first base sequence set is a maximum-length sequence, the first matrix is a row unitary matrix or a column unitary matrix, and the first function includes: performing a Kronecker product or a Hadamard product on the matrix form of the first base sequence set and the first matrix, and the obtained sequence in the first sequence set has good auto-correlation and cross-correlation, so that communication performance can be improved.

Optionally, in Manner 4, a specific sequence parameter used for the base sequence may be defined according to the protocol or indicated by the network device. The sequence parameter includes at least one of a length of a sequence, or a specifically sent actual sequence and a cyclic shift. If the sequence is a polyphase sequence in Manner 4-1, the parameter may further include at least one of parameters *a, b, c, d,* and N. The parameter defined according to the protocol or configured by the network device may further include a dimension of the used first matrix and/or a specific matrix, or a value of a parameter or an optional value set of a parameter may be given in the protocol in a predefinition manner. If the optional value set is configured, the network device or the terminal determines a value of the parameter based on an attribute of the network device or the terminal during use. For example, a reference factor for determining the value of the parameter may include an identifier of the network device (for example, a cell ID) or an identifier of the terminal device (for example, an IMSI of the terminal apparatus), or may be randomly selected. Alternatively, the network device may determine the value of the parameter based on an optional value range indication of the given parameter.

It may be understood that, in Manner 1 to Manner 4, any sequence, any sequence multiplied by a constant (including -1), or a conjugate sequence of any sequence in the first base sequence set is a subsequence of a sequence in the first sequence set, and the subsequence is obtained in an equally spaced sampling manner. In other words, in the foregoing example, the sequence, the sequence multiplied by the constant, or the conjugate sequence of the sequence in the first base sequence set may be extended in an equally spaced arrangement manner, to obtain the sequence in the first sequence set.

For example, in the example of Manner 1, the base sequences in the first base sequence set are connected end-to-end to obtain the sequence in the first sequence set. In other words, the plurality of sequences in the first base sequence set are used as subsequences of a same sequence in the first sequence set. For another example, in Manner 2, the base sequences are $zc1$ and $zc2$, and the sequences in the first sequence set include the sequence s1 = *[zc1, zc2*]* and the sequence s2 = [-$zc2$, $zc1$*]. The sequence s1 is used as an example. The base sequence $zc1$* and a conjugate sequence $zc2$* of the base sequence are subsequences of the sequence. Manner 3 to Manner 4 are not described in detail by using examples.

Manner 5: If the sequence in the first base sequence set is a sequence whose general term is $e^{-2\pi j \frac{f(n)+d}{q}}$, the first matrix may be a linear matrix on a Galois finite field GF(q), and is adapted to, for example, an RM code coding matrix or a BCH code coding matrix; and the first function is a Kronecker product or a Hadamard product. For a meaning of a symbol in the general term, refer to the foregoing descriptions of the system symbol meaning. Details are not described herein again.

Optionally, in Manner 5, a specific sequence parameter used for the base sequence may be defined according to the protocol or indicated by the network device. The sequence parameter includes at least one of a length of a sequence, or a specifically sent actual sequence and a cyclic shift. In addition, the parameter predefined according to the protocol or indicated by the network device may further include a dimension of the used first matrix and/or a specific matrix, or a value of a parameter or an optional value set of a parameter may be given in the protocol in a predefinition manner. If the optional value set is configured, the network device or the terminal determines a value of the parameter based on an attribute of the network device or the terminal during use. For example, a reference factor for determining the value of the parameter may include an identifier of the network device (for example, a cell ID) or an identifier of the terminal device (for example, an IMSI of the terminal apparatus), or may be randomly selected. Alternatively, the network device may determine the value of the parameter based on an optional value range indication of the given parameter.

S202: The communication apparatus transmits the signal based on the sequence in the first sequence set.

If the communication apparatus is a transmitter, the transmitter may send a signal based on the sequence in the first sequence set.

Specifically, the transmitter may determine a second sequence set from the sequences in the first sequence set. The second sequence set may include at least one sequence. For example, a sequence in the second sequence set may be selected based on performance such as a PAPR, a cross-correlation value, and a side lobe peak of an auto-correlation value. The transmitter may further map the sequence in the second sequence set to a transmission resource, to obtain a to-be-sent first signal, and send the first signal.

Optionally, the transmitter may map K sequences in the second sequence set to a same OFDM symbol, where K is a positive integer, K is less than or equal to M, and M is a quantity of sequences in the second sequence set; or map K sequences to a plurality of different OFDM symbols. The plurality of different OFDM symbols may be adjacent. When the K sequences are mapped to the same OFDM symbol, the K sequences may be separately mapped to N subcarriers that are contiguously distributed, or may be mapped in an interleaving manner to K*N subcarriers that are equally spaced, where N is a positive integer, and represents a length of each sequence in the second set.

FIG. 7 is used as an example. It is assumed that the second sequence set includes two sequences (in FIG. 7, sequences s1 and s2 are used as an example), and the sequences s1 and s2 are mapped to different OFDM symbols. In this case, the transmitter may map the sequence s1 to N contiguous subcarriers of an OFDM symbol #1, and map the sequence s2 to N contiguous subcarriers of an OFDM symbol #2.

In addition, as shown in FIG. 7, if the sequence s1 and the sequence s2 are mapped to a same OFDM symbol, the sequence s1 may be contiguously mapped to N contiguous subcarriers, and the sequence s2 may be mapped to N contiguous subcarriers. This mapping manner may be referred to as frequency domain blockwise mapping.

An example in which a length of the sequence zc1 and a length of the sequence zc2 are 63 is used. It can be learned that a length of the sequence s1 = *[zc1, zc2*]* and a length of the sequence s2 = [-$zc2$, $zc1$*] are 126. It is assumed that a location index of a sequence element is numbered from 0. When frequency domain blockwise mapping is used, an

index $d_u(n)$ of a bit n in the sequence s1 or a bit n in the sequence s2 on N=126 subcarriers in frequency domain satisfies:

$$d_u(n) = y_{N_{ID}^1}(m),$$

where $N_{ID}^1 = 1,2$ , $n \in [0, 1, \dots ,125\}$, and $m \in [0, 1, \dots ,62\}$;

a value of $N_{ID}^1$ may be configured by using an RRC message or the like, or may be a predefined value;
if

$$N_{ID}^1 = 1, \ y_1(n) = \begin{cases} x_1(m) & 0 < n \le 62 \\ x_2(m)^* & 63 \le n \le 125 \end{cases};$$

if

$$N_{ID}^1 = 2, \ y_2(n) = \begin{cases} -x_2(m) & 0 \le n \le 62 \\ x_1(m)^* & 63 \le n \le 125 \end{cases};$$

$$m = (n + 31N_{ID}^2) \bmod 63, \ \text{and} \ N_{ID}^2 = 1,2;$$

$$x_1(m) = e^{-j\frac{25\pi m(m+1)}{63}};$$

and

$$x_2(m) = e^{-j\frac{29\pi m(m+1)}{63}}.$$

$j = \sqrt{-1}$ . $x_1(m)$ and $x_2(m)$ may be considered as polyphase sequences whose general terms are $e^{-2\pi j\frac{(an^3+bn^2+cn+d)}{N}}$, where $a$ in the general term is equal to 0, and $b$ is not equal to 0. Optionally, $x_1(m)$ may correspond to zc1 in this application, and $x_2(m)$ may correspond to *zc2* in this application.

It may be understood that a frequency domain index expression of the frequency domain blockwise mapping manner of the sequence s2 may be implemented by reference, and details are not described again.

In addition, as shown in FIG. 7, an interleaving mapping manner may be used, and the sequence s1 and the sequence s2 may alternatively be mapped to 2N subcarriers of a same OFDM symbol in the interleaving manner. The mapping manner may be referred to as frequency domain interleaving mapping.

An example in which the length of the sequence zc1* and the length of the sequence zc2 are 63 is still used. It can be learned that the length of the sequence s1 = *[zc1, zc2*]* and the length of the sequence s2 = [-*zc2*, *zc*1 *]* are 126. When frequency domain blockwise mapping is used, an index $d_u(n)$ of a bit n in the sequence s1 or a bit n in the sequence s2 on N=126 subcarriers in frequency domain satisfies:

$$d_{PSS}(n) = y_{N_{ID}^1}(m),$$

where $N_{ID}^1 = 1,2$ , $n \in \{0, 1, \dots ,125\}$, and $m \in [0, 1, \dots ,62\}$;

a value of $N_{ID}^1$ may be configured by using an RRC message or the like, or may be a predefined value;
if

$$N_{ID}^1 = 1, \ y_1(n) = \begin{cases} x_1(m) & n \bmod 2 = 0 \\ x_2(m)^* & n \bmod 2 = 1 \end{cases};$$

if

$$N_{ID}^1 = 2, \; y_2(n) = \begin{cases} -x_2(m) & n \bmod 2 = 0 \\ x_1(m)^* & n \bmod 2 = 1 \end{cases};$$

$$m = \left\lfloor \frac{n}{2} \right\rfloor, \text{ and } N_{ID}^2 = 1, 2;$$

$$x_1(m) = e^{-j\frac{25\pi m(m+1)}{63}};$$

and

$$x_2(m) = e^{-j\frac{29\pi m(m+1)}{63}}.$$

$j = \sqrt{-1}$ . $x_1(m)$ and $x_2(m)$ may be considered as polyphase sequences whose general terms are $e^{-2\pi j\frac{(an^3+bn^2+cn+d)}{N}}$ , where *a* in the general term is equal to 0, and *b* is not equal to 0.

Optionally, $x_1(m)$ may correspond to zc1 in this application, and $x_2(m)$ may correspond to *zc2* in this application.

It may be understood that a frequency domain index expression of the frequency domain interleaving mapping manner of the sequence s2 may be implemented by reference, and details are not described again.

Optionally, if the communication apparatus is a receiver, in S202, after obtaining the first sequence set, the receiver may receive a signal from the transmitter based on the sequence in the first sequence set, without blindly detecting another sequence. Therefore, signal receiving efficiency can be improved.

Based on a same concept, an embodiment of this application further provides a communication apparatus. The communication apparatus may include corresponding hardware structures and/or software modules for performing the functions shown in the foregoing methods. A person skilled in the art should be easily aware that, in combination with the units and the method steps in the examples described in embodiments disclosed in this application, this application can be implemented by using hardware or a combination of hardware and computer software. Whether a function is performed by hardware or hardware driven by computer software depends on particular application scenarios and design constraints of the technical solutions.

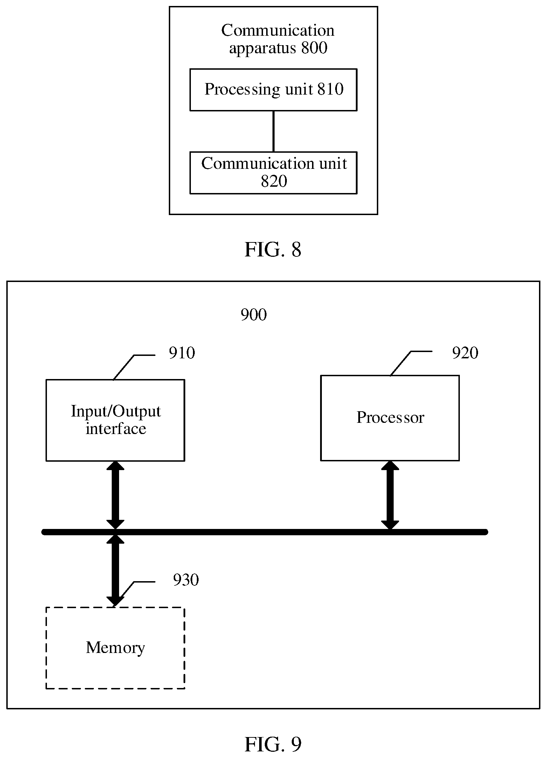

FIG. 8 to FIG. 10 are diagrams of structures of possible communication apparatuses according to embodiments of this application. The communication apparatus may be configured to implement functions of the terminal apparatus and/or the network device in the foregoing method embodiments. Therefore, beneficial effect of the foregoing method embodiments can also be implemented. In a possible implementation, the communication apparatus may be the terminal device or the network device shown in FIG. 1. For related details and effects, refer to the descriptions in the foregoing embodiments.

As shown in FIG. 8, a communication apparatus 800 includes a processing unit 810 and a communication unit 820. The communication unit 820 may alternatively be a transceiver unit, an input/output interface, or the like. The communication apparatus 800 may be configured to implement functions of the terminal apparatus and/or the network device in the method embodiment shown in FIG. 2.

When implementing the method shown in FIG. 2, the processing unit 810 may be configured to obtain a first sequence set, where the first sequence set is determined based on a first base sequence set and at least one of a first matrix and a first function. The communication unit 820 may be configured to transmit a signal based on a sequence in the first sequence set.

Optionally, the communication unit 820 may be specifically configured to obtain a second sequence set, where the second sequence set is a subset of the first sequence set; map the second sequence set to a transmission resource, to obtain a first signal; and send the first signal.

Optionally, the communication unit 820 may be specifically configured to map different sequences in the second sequence set to different orthogonal frequency division multiplexing OFDM symbols; or map K sequences in the second sequence set to a same OFDM symbol, where K is a positive integer greater than 1.

Optionally, the communication unit 820 may be specifically configured to separately map the K sequences in the second sequence set to N subcarriers that are contiguously distributed; or separately map, in an interleaving manner, the K sequences in the second sequence set to K*N subcarriers that are equally spaced, where N is a length of the sequence in the first sequence set and the second sequence set, N is a positive integer, K≤M, and M is a quantity of sequences in the second sequence set.

Optionally, the communication unit 820 may be specifically configured to receive a first signal, where the first signal is obtained by mapping a second sequence set to a transmission resource, and the second sequence set is a subset of the first sequence set.

For the actions implemented by the processing unit 810 and the communication unit 820, refer to the descriptions of corresponding actions in the foregoing method embodiments. Details are not described herein again.

In a possible implementation, the communication unit 820 may further receive first signaling, where the first signaling includes at least one piece of the following information: first information, indicating the sequence in the first base sequence set from a candidate set of base sequences; second information, indicating the first matrix from a candidate set of first matrices; and third information, indicating the first function from a candidate set of first functions.

In a possible implementation, the communication unit 820 may further receive second signaling, where the second signaling indicates at least one of the following: the candidate set of base sequences; the candidate set of first matrices; and the candidate set of first functions.

In a possible implementation, the communication unit 820 may further receive third signaling, where the third signaling indicates a modulation scheme of the sequence from a candidate set of modulation schemes; and/or indicates a coding scheme of the sequence from a candidate set of coding schemes.

In a possible implementation, the communication unit 820 may further receive fourth signaling, where the fourth signaling indicates the candidate set of modulation schemes and/or the candidate set of coding schemes.

In a possible implementation, the processing unit 810 may further determine a modulation scheme of the sequence based on at least one of the first base sequence set, the first matrix, and the first function, where the at least one of the first base sequence set, the first matrix, and the first function corresponds to the modulation scheme of the sequence; and/or the processing unit 810 determines a coding scheme of the sequence based on at least one of the first base sequence set, the first matrix, and the first function, where the at least one of the first base sequence set, the first matrix, and the first function corresponds to the modulation scheme and the coding scheme of the sequence.

It may be understood that in embodiments of this application, division into modules is an example, and is merely logical function division. In actual implementation, there may be another division manner. In addition, functional modules in embodiments of this application may be integrated into one processor, each module may exist alone physically, or two or more modules may be integrated into one module. The integrated module may be implemented in a form of hardware, or may be implemented in a form of a software functional module.

FIG. 9 shows a communication apparatus 900 according to an embodiment of this application. The communication apparatus 900 is configured to implement the sequence transmission method provided in this application. The communication apparatus 900 may be a communication apparatus to which the sequence transmission method is applied, or may be a component in the communication apparatus, or may be an apparatus that can be used in combination with the communication apparatus. The communication apparatus 900 may be a terminal apparatus and/or a network device. The communication apparatus 900 may be a chip system or a chip. In this embodiment of this application, the chip system may include a chip, or may include a chip and another discrete component. The communication apparatus 900 includes at least one processor 920, configured to implement the sequence transmission method provided in embodiments of this application. The communication apparatus 900 may further include an input/output interface 910, and the input/output interface may include an input interface and/or an output interface. In this embodiment of this application, the input/output interface 910 may be configured to communicate with another apparatus via a transmission medium, and a function of the input/output interface 910 may include sending and/or receiving. For example, when the communication apparatus 900 is a chip, the communication apparatus 900 performs transmission with another chip or device through the input/output interface 910. The processor 920 may be configured to implement the method described in the foregoing method embodiments.

For example, the processor 920 may be configured to perform an action performed by the processing unit 810, and the input/output interface 910 may be configured to perform an action performed by the communication unit 820. Details are not described again.

Optionally, the communication apparatus 900 may further include at least one memory 930, configured to store program instructions and/or data. The memory 930 is coupled to the processor 920. The coupling in this embodiment of this application may be an indirect coupling or a communication connection between apparatuses, units, or modules in an electrical form, a mechanical form, or another form, and is used for information exchange between the apparatuses, the units, or the modules. The processor 920 may cooperate with the memory 930. The processor 920 may execute the program instructions stored in the memory 930. At least one of the at least one memory may be integrated with the processor.

In this embodiment of this application, the memory 930 may be a non-volatile memory such as a hard disk drive (hard disk drive, HDD) or a solid-state drive (solid-state drive, SSD), or may be a volatile memory (volatile memory) such as a random access memory (random access memory, RAM). The memory is any other medium that can carry or store expected program code in a form of an instruction structure or a data structure and that can be accessed by a computer, but is not limited thereto. The memory in this embodiment of this application may alternatively be a circuit or any other apparatus that can implement a storage function, and is configured to store program instructions and/or data.

In this embodiment of this application, the processor 920 may be a general-purpose processor, a digital signal processor, an application-specific integrated circuit, a field programmable gate array or another programmable logic device, a discrete gate or a transistor logic device, or a discrete hardware component, so that the methods, steps, and logical block diagrams that are disclosed in embodiments of this application may be implemented or performed. The general-purpose processor may be a microprocessor, any conventional processor, or the like. The steps of the method disclosed with reference to embodiments of this application may be directly performed by a hardware processor, or may be performed by using a combination of hardware in the processor and a software module.

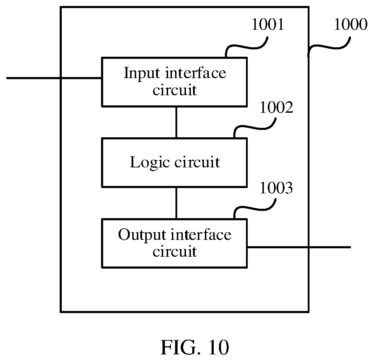

FIG. 10 shows a communication apparatus 1000 according to an embodiment of this application. The communication apparatus 1000 is configured to implement the sequence transmission method provided in this application. The communication apparatus 1000 may be a communication apparatus to which the sequence transmission method described in embodiments of this application is applied, or may be a component in the communication apparatus, or may be an apparatus that can be used in combination with the communication apparatus. The communication apparatus 1000 may be a terminal apparatus and/or a network device. The communication apparatus 1000 may be a chip system or a chip. In this embodiment of this application, the chip system may include a chip, or may include a chip and another discrete component. A part or all of the sequence transmission method provided in the foregoing embodiments may be implemented by hardware or software. When the sequence transmission method is implemented by hardware, the communication apparatus 1000 may include an input interface circuit 1001, a logic circuit 1002, and an output interface circuit 1003.

Optionally, for example, the apparatus is configured to implement a function of a receiver. The input interface circuit 1001 may be configured to perform the receiving action performed by the communication unit 820, the output interface circuit 1003 may be configured to perform the sending action performed by the communication unit 820, and the logic circuit 1002 may be configured to perform the action performed by the processing unit 810. Details are not described again.

Optionally, in a specific implementation, the communication apparatus 1000 may be a chip or an integrated circuit.

Some or all of operations and functions performed by the communication apparatus described in the foregoing method embodiments of this application may be implemented by using the chip or the integrated circuit.

An embodiment of this application provides a computer-readable storage medium storing a computer program. The computer program includes instructions used to perform the foregoing method embodiments.

An embodiment of this application provides a computer program product including instructions. When the computer program product runs on a computer, the computer is enabled to perform the foregoing method embodiments.

An embodiment of this application provides a communication system, including the terminal apparatus and/or the network device described above. For example, the terminal device may be configured to perform the method shown in FIG. 2.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, any conventional processor, or the like.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, an SSD), or the like.

It should be noted that a part of this patent application document includes copyright-protected content. Except for making copies of patent documents of the Patent Office or recorded content of patent documents, the copyright owner reserves the copyright.

The network device and the terminal device in the foregoing apparatus embodiments correspond to the network device or the terminal device in the method embodiments. A corresponding module or unit performs a corresponding step.

For example, a communication unit (a transceiver) performs a receiving step or a sending step in the method embodiments, and a step other than the sending step and the receiving step may be performed by a processing unit (a processor). For a function of a specific unit, refer to a corresponding method embodiment. There may be one or more processors.

Terms such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may perform communication by using a local process and/or a remote process and based on, for example, a signal having one or more data packets (for example, data from two components interacting with another component in a local system, a distributed system, and/or across a network such as the internet interacting with another system by using the signal).

A person of ordinary skill in the art may be aware that, in combination with illustrative logical blocks (illustrative logical blocks) described in embodiments disclosed in this specification and steps (steps), this application can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or another form.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. When functions are implemented in a form of a software functional unit and sold or used as an independent product, the functions may be stored in a computer-readable storage medium.

## Claims

1. A sequence transmission method, comprising:

   obtaining a first sequence set, wherein the first sequence set is determined based on a first base sequence set and at least one of a first matrix and a first function; and
   transmitting a signal based on a sequence in the first sequence set.

2. The method according to claim 1, wherein the first matrix and the first function are used to extend a sequence in the first base sequence set.

3. The method according to claim 1 or 2, wherein a length of the sequence in the first sequence set is an integer multiple of a length of the sequence in the first base sequence set, and/or a quantity of sequences in the first sequence set is an integer multiple of a quantity of sequences in the first base sequence set.

4. The method according to any one of claims 1 to 3, wherein any sequence, any sequence multiplied by a constant, or a conjugate sequence of any sequence in the first base sequence set is a subsequence of a sequence in the first sequence set, and the subsequence is obtained in an equally spaced sampling manner.

5. The method according to any one of claims 1 to 4, wherein the first base sequence set and the first function meet:

the sequence in the first base sequence set is a polyphase sequence whose general term is $e^{-2\pi j\frac{(an^3+bn^2+cn+d)}{N}}$,

wherein e is an Euler constant, $1 \le n \le N$, *a, b, c,* and d are all constants, $j = \sqrt{-1}$, *N* is a prime number, and the first function comprises performing sequence connection on the sequences in the first base sequence set.

6. The method according to any one of claims 1 to 4, wherein the first matrix and the first function meet:

the first matrix is represented as $\begin{bmatrix} x1 & x2^* \\ -x2 & x1^* \end{bmatrix}$, and the first function is used to respectively replace x1 and x2 in the first matrix with different sequences in the first base sequence set, wherein x2* represents a conjugate sequence of the sequence x2, x1* represents a conjugate sequence of the sequence x1, and -x2 represents the sequence x2 multiplied by minus 1.

7. The method according to any one of claims 1 to 6, wherein the first base sequence set, the first matrix, and the first function meet:

the sequence in the first base sequence set is a binary sequence, the first matrix is a real orthogonal coding matrix of a 2x2 matrix, a 4x4 matrix, or an 8x8 matrix, and the first function is used to replace at least two elements in the first matrix with sequences in the first base sequence set;
the sequence in the first base sequence set is a polyphase sequence whose general term is

$e^{-2\pi j\frac{(an^3+bn^2+cn+d)}{N}}$, wherein *e* is an Euler constant, $1 \le n \le N$, *a, b, c,* and d are all constants, $j = \sqrt{-1}$, *N* is a prime number, the first matrix is a unitary matrix, and the first function comprises performing a Kronecker product on a matrix form of the first base sequence set and the first matrix;
sequences in the first base sequence set form a complementary sequence pair or a complementary sequence set, the first matrix is a unitary matrix, and the first function comprises performing a Kronecker product or a Hadamard product on a matrix form of the first base sequence set and the first matrix; or
the sequence in the first base sequence set is a maximum-length sequence, the first matrix is a row unitary matrix or a column unitary matrix, and the first function comprises performing a Kronecker product or a Hadamard product on a matrix form of the first base sequence set and the first matrix.

8. The method according to claim 1 or 2, wherein the first base sequence set, the first matrix, and the first function meet:

the sequence in the first base sequence set is a sequence whose general term is $e^{-2\pi j\frac{f(n)+d}{q}}$, wherein $f$ (n) is a positive integer whose value belongs to [0, $q$ - 1], d is a constant, $j = \sqrt{-1}$, $q$ is a positive integer, the first matrix is a linear matrix on a Galois finite field GF(q), and the first function comprises performing matrix multiplication on a matrix form of the first base sequence set and the first matrix.

9. The method according to any one of claims 1 to 8, wherein

the first base sequence set is determined based on a second base sequence set and at least one of a second function and a second matrix;
a sequence in the second base sequence set comprises at least one of the following:

a polyphase sequence whose general term is $e^{-2\pi j\frac{(an^3+bn^2+cn+d)}{N}}$, wherein e is an Euler constant, $1 \le n \le N$, *a,*

*b, c,* and *d* are all constants, $j = \sqrt{-1}$, *N* is a prime number, and N is a prime number;
a binary sequence; and

a sequence whose general term is $e^{-2\pi j\frac{f(n)+d}{q}}$, wherein $f$(n) is a positive integer whose value belongs to [0, $q$

- 1], *d* is a constant, $j = \sqrt{-1}$, and $q$ is a positive integer;

the second function comprises at least one of the following:

performing sequence connection on sequences in the second base sequence set;
replacing at least two elements in the second matrix with different sequences in the base sequence set; and
performing a Kronecker product or a Hadamard product on a matrix form of the second base sequence set and the second matrix; and
the second matrix comprises at least one of the following:

a real orthogonal coding matrix of a 2x2 matrix, a 4x4 matrix, or an 8x8 matrix; and
a unitary matrix.

10. The method according to claim 7 or 9, wherein the unitary matrix is a discrete Fourier transform DFT matrix, a cyclic shift orthogonal matrix, or a circulant unitary matrix.

11. The method according to any one of claims 1 to 10, wherein transmitting the signal based on the sequence in the first sequence set comprises:

obtaining a second sequence set, wherein the second sequence set is a subset of the first sequence set;
mapping the second sequence set to a transmission resource, to obtain a first signal; and
sending the first signal.

12. The method according to claim 11, wherein mapping the second sequence set to the transmission resource comprises:

mapping different sequences in the second sequence set to different orthogonal frequency division multiplexing OFDM symbols; or
mapping K sequences in the second sequence set to a same OFDM symbol, wherein K is a positive integer greater than 1.

13. The method according to claim 12, wherein mapping the K sequences in the second sequence set to the same OFDM symbol comprises:

separately mapping the K sequences in the second sequence set to N subcarriers that are contiguously distributed; or
separately mapping, in an interleaving manner, the K sequences in the second sequence set to K*N subcarriers that are equally spaced, wherein
N is a length of the sequence in the first sequence set and the second sequence set, N is a positive integer, $K \leq M$, and M is a quantity of sequences in the second sequence set.

14. The method according to any one of claims 1 to 10, wherein transmitting the signal based on the sequence in the first sequence set comprises:
receiving a first signal, wherein the first signal is obtained by mapping a second sequence set to a transmission resource, and the second sequence set is a subset of the first sequence set.

15. The method according to any one of claims 1 to 14, wherein the sequences in the first base sequence set are a first ZC sequence and a second ZC sequence, the first matrix is $\begin{bmatrix} x & y^* \\ -y & x^* \end{bmatrix}$, the first function is used to respectively replace x and y with the first ZC sequence and the second ZC sequence, y* represents a conjugate sequence of the sequence y, x* represents a conjugate sequence of the sequence x, and -y represents the sequence y multiplied by minus 1.

16. The method according to claim 15, wherein the first ZC sequence is represented as zc1, the second ZC sequence is represented as zc2, and the sequences in the first sequence set comprise:

[zc1, zc2*1, wherein zc2* represents a conjugate sequence of zc2; and
[-zc2, zc1*], wherein -zc2 represents zc2 multiplied by minus 1, and zc1* represents a conjugate sequence of zc1.

17. The method according to any one of claims 1 to 14, wherein the first base sequence comprises a row of elements in a third matrix, the third matrix is a binary matrix, a 1st row of elements and a 2nd row of elements in the first matrix form Golay complementary sequences, the first matrix is a cyclic shift orthogonal matrix, the first function comprises performing a Kronecker product on a matrix form of the first base sequence set and the first matrix, a sequence in the first sequence set is a row of elements in a fourth matrix, and the fourth matrix is a matrix obtained by performing the Kronecker product on the matrix form of the first base sequence set and the first matrix.

18. The method according to any one of claims 1 to 17, wherein the method further comprises:
receiving first signaling, wherein the first signaling comprises at least one of the following information:

first information, indicating the sequence in the first base sequence set from a candidate set of base sequences;
second information, indicating the first matrix from a candidate set of first matrices; and
third information, indicating the first function from a candidate set of first functions.

19. The method according to claim 18, wherein the method further comprises:
receiving second signaling, wherein the second signaling indicates at least one of the following:

the candidate set of base sequences;
the candidate set of first matrices; and
the candidate set of first functions.

20. The method according to any one of claims 1 to 19, wherein the method further comprises:

receiving third signaling, wherein the third signaling
indicates a modulation scheme of the sequence from a candidate set of modulation schemes; and/or
indicates a coding scheme of the sequence from a candidate set of coding schemes.

21. The method according to claim 18, wherein the method further comprises:
receiving fourth signaling, wherein the fourth signaling indicates the candidate set of modulation schemes and/or the candidate set of coding schemes.

22. The method according to any one of claims 1 to 19, wherein the method further comprises:

determining a modulation scheme of the sequence based on at least one of the first base sequence set, the first matrix, and the first function, wherein the at least one of the first base sequence set, the first matrix, and the first function corresponds to the modulation scheme of the sequence; and/or
determining a coding scheme of the sequence based on at least one of the first base sequence set, the first matrix, and the first function, wherein the at least one of the first base sequence set, the first matrix, and the first function corresponds to the modulation scheme and the coding scheme of the sequence.

23. A sequence transmission apparatus, comprising:

a processing unit, configured to obtain a first sequence set, wherein the first sequence set is determined based on a first base sequence set and at least one of a first matrix and a first function; and
a communication unit, configured to transmit a signal based on a sequence in the first sequence set.

24. The apparatus according to claim 23, wherein the first matrix and the first function are used to extend a sequence in the first base sequence set.

25. The apparatus according to claim 23 or 24, wherein a length of the sequence in the first sequence set is an integer multiple of a length of the sequence in the first base sequence set, and/or a quantity of sequences in the first sequence set is an integer multiple of a quantity of sequences in the first base sequence set.

26. The apparatus according to any one of claims 23 to 25, wherein any sequence, any sequence multiplied by a constant, or a conjugate sequence of any sequence in the first base sequence set is a subsequence of a sequence in the first sequence set, and the subsequence is obtained in an equally spaced sampling manner.

27. The apparatus according to any one of claims 23 to 26, wherein the first base sequence set and the first function meet:

the sequence in the first base sequence set is a polyphase sequence whose general term is $e^{-2\pi j\frac{(an^3+bn^2+cn+d)}{N}}$,

wherein e is an Euler constant, $1\leq n\leq N$, *a, b, c,* and d are all constants, $j=\sqrt{-1}$, *N* is a prime number, and the first function comprises performing sequence connection on the sequences in the first base sequence set.

28. The apparatus according to any one of claims 23 to 27, wherein the first matrix and the first function meet:

the first matrix is represented as $\begin{bmatrix} x1 & x2^* \\ -x2 & x1^* \end{bmatrix}$, and the first function is used to respectively replace x1 and x2 in the first matrix with different sequences in the first base sequence set, wherein x2* represents a conjugate sequence of the sequence x2, x1* represents a conjugate sequence of the sequence x1, and -x2 represents the sequence x2 multiplied by minus 1.

29. The apparatus according to any one of claims 23 to 28, wherein the first base sequence set, the first matrix, and the first function meet:

the sequence in the first base sequence set is a binary sequence, the first matrix is a real orthogonal coding matrix of a 2x2 matrix, a 4x4 matrix, or an 8x8 matrix, and the first function is used to replace at least two elements in the first matrix with sequences in the first base sequence set;

the sequence in the first base sequence set is a polyphase sequence whose general term is $e^{-2\pi j\frac{(an^3+bn^2+cn+d)}{N}}$,

wherein *e* is an Euler constant, $1\leq n\leq N$, *a, b, c,* and *d* are all constants, $j=\sqrt{-1}$, *N* is a prime number, the first matrix is a unitary matrix, and the first function comprises performing a Kronecker product on a matrix form of the first base sequence set and the first matrix;

sequences in the first base sequence set form a complementary sequence pair or a complementary sequence set, the first matrix is a unitary matrix, and the first function comprises performing a Kronecker product or a Hadamard product on a matrix form of the first base sequence set and the first matrix; or

the sequence in the first base sequence set is a maximum-length sequence, the first matrix is a row unitary matrix or a column unitary matrix, and the first function comprises performing a Kronecker product or a Hadamard product on a matrix form of the first base sequence set and the first matrix.

30. The apparatus according to claim 23 or 24, wherein the first base sequence set, the first matrix, and the first function meet:

the sequence in the first base sequence set is a sequence whose general term is $e^{-2\pi j\frac{f(n)+d}{q}}$, wherein $f$ (n) is a positive integer whose value belongs to [0, $q$ - 1], *d* is a constant, $j=\sqrt{-1}$, $q$ is a positive integer, the first matrix is a linear matrix on a Galois finite field GF(q), and the first function comprises performing matrix multiplication on a matrix form of the first base sequence set and the first matrix.

31. The apparatus according to any one of claims 23 to 30, wherein

the first base sequence set is determined based on a second base sequence set and at least one of a second function and a second matrix;

a sequence in the second base sequence set comprises at least one of the following:

a polyphase sequence whose general term is e $e^{-2\pi j\frac{(an^3+bn^2+cn+d)}{N}}$, wherein e is an Euler constant, $1\leq n\leq N$,

*a, b, c,* and d are all constants, $j=\sqrt{-1}$, *N* is a prime number, and N is a prime number;

a binary sequence; and

a sequence whose general term is $e^{-2\pi j\frac{f(n)+d}{q}}$, wherein $f$(n) is a positive integer whose value belongs to [0, $q$

- 1], d is a constant, $j=\sqrt{-1}$, and $q$ is a positive integer;

the second function comprises at least one of the following:

performing sequence connection on sequences in the second base sequence set;
replacing at least two elements in the second matrix with different sequences in the base sequence set; and
performing a Kronecker product or a Hadamard product on a matrix form of the second base sequence set and the second matrix; and
the second matrix comprises at least one of the following:

a real orthogonal coding matrix of a 2x2 matrix, a 4x4 matrix, or an 8x8 matrix; and
a unitary matrix.

32. The apparatus according to claim 30 or 31, wherein the unitary matrix is a discrete Fourier transform DFT matrix, a cyclic shift orthogonal matrix, or a circulant unitary matrix.

33. The apparatus according to any one of claims 23 to 32, wherein the communication unit is specifically configured to:

obtain a second sequence set, wherein the second sequence set is a subset of the first sequence set;
map the second sequence set to a transmission resource, to obtain a first signal; and
send the first signal.

34. The apparatus according to claim 33, wherein the communication unit is specifically configured to:

map different sequences in the second sequence set to different orthogonal frequency division multiplexing OFDM symbols; or
map K sequences in the second sequence set to a same OFDM symbol, wherein K is a positive integer greater than 1.

35. The apparatus according to claim 34, wherein the communication unit is specifically configured to:

separately map the K sequences in the second sequence set to N subcarriers that are contiguously distributed; or
separately map, in an interleaving manner, the K sequences in the second sequence set to K*N subcarriers that are equally spaced, wherein
N is a length of the sequence in the first sequence set and the second sequence set, N is a positive integer, K≤M, and M is a quantity of sequences in the second sequence set.

36. The apparatus according to any one of claims 23 to 32, wherein the communication unit is specifically configured to: receive a first signal, wherein the first signal is obtained by mapping a second sequence set to a transmission resource, and the second sequence set is a subset of the first sequence set.

37. The apparatus according to any one of claims 23 to 36, wherein the sequences in the first base sequence set are a first ZC sequence and a second ZC sequence, the first matrix is $\begin{bmatrix} x & y^* \\ -y & x^* \end{bmatrix}$, the first function is used to respectively replace x and y with the first ZC sequence and the second ZC sequence, y* represents a conjugate sequence of the sequence y, x* represents a conjugate sequence of the sequence x, and -y represents the sequence y multiplied by minus 1.

38. The apparatus according to claim 37, wherein the first ZC sequence is represented as zc1, the second ZC sequence is represented as zc2, and the sequences in the first sequence set comprise:

[zc1, zc2*1, wherein zc2* represents a conjugate sequence of zc2; and
[-zc2, zc1*], wherein -zc2 represents zc2 multiplied by minus 1, and zc1* represents a conjugate sequence of zc1.

39. The apparatus according to any one of claims 23 to 36, wherein the first base sequence comprises a row of elements in a third matrix, the third matrix is a binary matrix, a 1st row of elements and a 2nd row of elements in the first matrix form Golay complementary sequences, the first matrix is a cyclic shift orthogonal matrix, the first function comprises performing a Kronecker product on a matrix form of the first base sequence set and the first matrix, a sequence in the first sequence set is a row of elements in a fourth matrix, and the fourth matrix is a matrix obtained by performing the Kronecker product on the matrix form of the first base sequence set and the first matrix.

40. The apparatus according to any one of claims 23 to 39, wherein the communication unit is further configured to: receive first signaling, wherein the first signaling comprises at least one of the following information:

   first information, indicating the sequence in the first base sequence set from a candidate set of base sequences;
   second information, indicating the first matrix from a candidate set of first matrices; and
   third information, indicating the first function from a candidate set of first functions.

41. The apparatus according to claim 40, wherein the communication unit is further configured to: receive second signaling, wherein the second signaling indicates at least one of the following:

   the candidate set of base sequences;
   the candidate set of first matrices; and
   the candidate set of first functions.

42. The apparatus according to any one of claims 23 to 41, wherein the communication unit is further configured to:

   receive third signaling, wherein the third signaling
   indicates a modulation scheme of the sequence from a candidate set of modulation schemes; and/or
   indicates a coding scheme of the sequence from a candidate set of coding schemes.

43. The apparatus according to claim 42, wherein the communication unit is further configured to: receive fourth signaling, wherein the fourth signaling indicates the candidate set of modulation schemes and/or the candidate set of coding schemes.

44. The apparatus according to any one of claims 23 to 43, wherein the communication unit is further configured to:

   determine a modulation scheme of the sequence based on at least one of the first base sequence set, the first matrix, and the first function, wherein the at least one of the first base sequence set, the first matrix, and the first function corresponds to the modulation scheme of the sequence; and/or
   determine a coding scheme of the sequence based on at least one of the first base sequence set, the first matrix, and the first function, wherein the at least one of the first base sequence set, the first matrix, and the first function corresponds to the modulation scheme and the coding scheme of the sequence.

45. A communication apparatus, comprising a processor, wherein the memory is configured to execute computer program instructions to implement the method according to any one of claims 1 to 22.

46. The communication apparatus according to claim 45, further comprising a memory and/or a transceiver, wherein the memory is configured to store the computer program instructions, and the transceiver is used by the communication apparatus to perform communication.

47. A chip system, wherein the chip system comprises a logic circuit and an input/output interface, wherein the input/output interface is configured to communicate with another communication apparatus outside the chip system, and the logic circuit is configured to perform the method according to any one of claims 1 to 22.

48. A computer-readable storage medium, wherein the computer-readable storage medium is configured to store a computer program, and when the computer program is run on a computer, the computer is enabled to perform the method according to any one of claims 1 to 22.

49. A computer program product, wherein the computer program product comprises a computer program, and when the computer program is run on a computer, the computer is enabled to perform the method according to any one of claims 1 to 22.

FIG. 1

S201: A communication apparatus obtains a first sequence set, where the first sequence set is determined based on a first base sequence set and at least one of a first matrix and a first function

S202: The communication apparatus transmits a signal based on a sequence in the first sequence set

FIG. 2

32

FIG. 3

FIG. 4

Periodic auto-correlation comparison

FIG. 5

Periodic cross-correlation comparison

FIG. 6

FIG. 7

FIG. 8

FIG. 9

FIG. 10

## INTERNATIONAL SEARCH REPORT

| International application No. |
| --- |
| **PCT/CN2022/139755** |

| A. | CLASSIFICATION OF SUBJECT MATTER |
| --- | --- |

H04L27/26(2006.01)i

According to International Patent Classification (IPC) or to both national classification and IPC

| B. | FIELDS SEARCHED |
| --- | --- |

Minimum documentation searched (classification system followed by classification symbols)

IPC: H04L H04W

Documentation searched other than minimum documentation to the extent that such documents are included in the fields searched

Electronic data base consulted during the international search (name of data base and, where practicable, search terms used)

CNABS; CNTXT; VEN; USTXT; WOTXT; ENTXTC; ENTXT; CNKI; 3GPP: 序列, 扩展, 扩频, 函数, 矩阵, 基序列, 互相关, 长度, 数量, 调制, 编码, sequence, extend, spread, function, matrix, basic sequence, cross-correlation, length, number, modulate, code.

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 110417698 A (ZTE CORP.) 05 November 2019 (2019-11-05)<br>description, paragraphs 26-40 | 1-4, 23-26, 45-49 |
| Y | CN 110417698 A (ZTE CORP.) 05 November 2019 (2019-11-05)<br>description, paragraphs 26-40 | 2, 24 |
| X | KR 20130073623 A (ELECTRONICS AND TELECOMMUNICATIONS RESEARCH INSTITUTE) 03 July 2013 (2013-07-03)<br>description, paragraphs 48-51 | 1-4, 23-26, 45-49 |
| Y | KR 20130073623 A (ELECTRONICS AND TELECOMMUNICATIONS RESEARCH INSTITUTE) 03 July 2013 (2013-07-03)<br>description, paragraphs 48-51 | 2, 24 |
| A | CN 114747187 A (QUALCOMM INC.) 12 July 2022 (2022-07-12)<br>entire document | 1-49 |
| A | CN 106160827 A (ZTE CORP.) 23 November 2016 (2016-11-23)<br>entire document | 1-49 |

☑ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **27 July 2023** | **16 August 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**EP 4 625 916 A1**

**INTERNATIONAL SEARCH REPORT**

International application No.

**PCT/CN2022/139755**

**C.    DOCUMENTS CONSIDERED TO BE RELEVANT**

| Category* | Citation of document, with indication, where appropriate, of the relevant passages | Relevant to claim No. |
|---|---|---|
| A | CN 103001723 A (CHONGQING COMMUNICATION COLLEGE OF THE CHINESE PEOPLE'S LIBERATION ARMY) 27 March 2013 (2013-03-27)<br>     entire document | 1-49 |
| A | CN 105656620 A (SHANGHAI GUOLU TRANSPORTATION TECHNOLOGY CO., LTD.) 08 June 2016 (2016-06-08)<br>     entire document | 1-49 |

Form PCT/ISA/210 (second sheet) (July 2022)

39

**INTERNATIONAL SEARCH REPORT**
Information on patent family members

International application No.

**PCT/CN2022/139755**

| Patent document cited in search report | | | Publication date (day/month/year) | Patent family member(s) | | | Publication date (day/month/year) |
|---|---|---|---|---|---|---|---|
| CN | 110417698 | A | 05 November 2019 | WO | 2019206144 | A1 | 31 October 2019 |
| | | | | CN | 110417698 | B | 05 August 2022 |
| KR | 20130073623 | A | 03 July 2013 | | None | | |
| CN | 114747187 | A | 12 July 2022 | EP | 4073990 | A1 | 19 October 2022 |
| | | | | US | 2022255783 | A1 | 11 August 2022 |
| | | | | WO | 2021118863 | A1 | 17 June 2021 |
| | | | | US | 2021176104 | A1 | 10 June 2021 |
| | | | | US | 11329851 | B2 | 10 May 2022 |
| | | | | IN | 202227026984 | A | 26 August 2022 |
| CN | 106160827 | A | 23 November 2016 | WO | 2016169414 | A1 | 27 October 2016 |
| | | | | CN | 106160827 | B | 25 December 2020 |
| CN | 103001723 | A | 27 March 2013 | | None | | |
| CN | 105656620 | A | 08 June 2016 | | None | | |

Form PCT/ISA/210 (patent family annex) (July 2022)